# EUROPÄISCHE PATENTANMELDUNG

(11) **EP 2 364 627 A1**
(43) Veröffentlichungstag der Anmeldung: **14.09.2011**
(21) Anmeldenummer: 11153116.6
(22) Anmeldetag: 03.05.2007
(51) Int. Cl.: A47J 43/07

(54) **Gerät zum Bearbeiten von Lebensmitteln**

(30) Priorität: 04.05.2006 CH 730062006
(62) Teilanmeldung aus: 07720114.3
(71) Anmelder: SwizzzPROZZZ AG, 6375 Beckenried (CH)
(72) Erfinder: Herren, Bruno, 6375, Beckenried (CH)
(74) Vertreter: Rentsch Partner AG

(57) **Zusammenfassung**

Es wird eine Arbeitseinheit (60, 160, 260) beziehungsweise ein Gerät (1, 1', 100) mit einer derartigen Arbeitseinheit zum Bearbeiten von Lebensmitteln bei dem oberhalb und/oder unterhalb des Arbeitsmittels mindestens ein Abweiser angeordnet ist. Die Arbeitseinheit ist mittels einer Antriebseinheit (10, 10') des Gerätes antreibbar und in eine Drehbewegung versetzbar. Die erfindungsgemässen Abweiser umfassen mindestens je einen in Umfangsrichtung der Arbeitsachse (A) wirkenden Abweiserflügel, welcher im Betrieb der Arbeitseinheit (60, 160, 260) mit der Tragachse (67, 167, 267) mitdreht, um das zu bearbeitende Gut, das beim Rotieren der Arbeitseinheit (60) um die Arbeitsachse (A) nach oben oder unten aus dem Wirkbereich der Arbeitsmittel (63, 63', 63", 64, 64', 164, 164', 252) geschleudert wird, zurück in diesen Wirkbereich zu fördern.

## Beschreibung

### FELD DER ERFINDUNG

Zum Zerkleinern von Lebensmitteln, insbesondere zum Hacken von Zwiebeln sind zum Beispiel aus der US 6,467,711 oder der EP-B-0 345 223 Hacker bekannt, die ein über das zu zerkleinernde Gut stülpbares Gehäuse und ein in dem Gehäuse geführtes, mittels eines Betätigungsmechanismus mit einem Druckknopf und einem Stössel gegen die Kraft einer Feder, verschiebbares Messer aufweisen. Das Messer lässt sich gegen die Kraft der Feder nach unten verschieben und wird bei der nachfolgenden Bewegung nach oben durch eine Führung im Gehäuse um einen bestimmten Winkel relativ zum Gehäuse verdreht. Ein zwischen Betätigungsmechanismus und Gehäuse angeordneter Fortschaltmechanismus stellt sicher, dass eine zwangsläufige Fortschaltung des Messers gewährleistet ist. Diese Zwangsfortschaltung hat sich als sehr vorteilhaft erwiesen, da sie ein "auf der Stelle Hacken" des Messers verhindert. Dadurch wird die Effektivität des Hackers erhöht und die gleichmässige Grössenverteilung des Hackgutes verbessert. Die Geräte sind weit verbreitet, weisen jedoch einige Nachteile auf. So muss zum Beispiel mit viel Kraft auf den Druckknopf geschlagen werden um hartes Gemüse hacken zu können. Faserige Gemüse wie Fenchel oder Lauch lassen sich nur schlecht oder gar nicht hacken und bei feinem Schneidgut wie Kräutern sind die Ergebnisse eher unbefriedigend.

Seit Jahren sind Geräte mit Kurbelantrieb zum Bearbeiten von Gemüse, wie zum Beispiel das Gerät aus der US 6,035,771, bekannt, bei denen zwei in entgegengesetzten Richtungen rechtwinklig abstehende Klingen auf einer Welle angeordnet sind, die senkrecht in einen Schneidgutbehälter ragt. Die Klingen sind jeweils nur an der Vorderkante mit einer Schneide versehen, so dass die Kurbel stets im Uhrzeigersinn gedreht werden muss. Wegen der gleichbleibenden Drehrichtung der Klingen und in Folge der relativ niedrigen Drehzahl lassen sich bei hartem oder faserigem Schneidgut nur mässige Ergebnisse erzielen, da das Schneidgut oft entweder von den Klingen mitgenommen und nicht zerschnitten wird, oder es zum Blockieren der Klingen kommt. Dem kann nur durch eine verhältnismässig hohe Geschwindigkeit der Klingen einigermassen entgegengewirkt werden, was jedoch besonders beim Zwiebelschneiden leicht dazu führen kann, dass ein befriedigender Grad von Homogenität erst bei hohem Zerkleinerungsgrad eintritt. Dieses Problem tritt auch bei elektrisch angetriebenen Geräten auf, bei denen jedoch auch noch eine unerwünschte Hitzeentwicklung hinzukommt.

Aus der WO 2004/073474 ist ein kleines manuell betriebenes Gerät bekannt, das zum Gebrauch in den Händen gehalten wird. Durch wiederholtes Verdrehen eines Antriebteils gegen den Behälter mit dem Schneidgut wird eine Welle mit zwei in entgegengesetzten Richtungen rechtwinklig abstehenden Klingen angetrieben. Da das Gerät zum Gebrauch annähernd vollständig von den Händen des Benutzers umschlossen werden muss, ist die Baugrösse äusserst beschränkt. Zum Befüllen muss das Schneidgut - z. B. eine Zwiebel - geviertelt werden, da es sonst im Schneidgutbehälter keinen Platz hat. Um ein befriedigendes Schneidergebnis zu erzielen, muss der Antriebsteil 40 bis 60 mal relativ zu den übrigen Teilen des Geräts in abwechselnd entgegengesetzte Drehbewegungen versetzt werden. Da die Klingen beidseitig mit Schneiden versehen sind, lässt sich durch gezielte Umkehr des Drehsinns der Welle in beiden Drehrichtungen schneiden. Das Gerät zeigt zwar passable Schneidergebnisse, hat aber den Nachteil, dass sich grössere Mengen von Schneidgut nicht in sinnvoller Zeit bewältigen lassen. Da das Schneidgut - z. B. eine Zwiebel - vor dem Einfüllen in das Gerät bereits in Viertel geschnitten werden muss, wird auf den Einsatz des Gerätes oft ganz verzichtet und die Zwiebel einfach mit dem Messer weiter zerkleinert.

Aus der EP 1 385 409 ist ein weiteres kleines Handgerät bekannt, bei dem auf die angetriebene Welle eine Achse aufgesteckt werden kann, die vier radial abstehende annähernd rechtwinklig auf Lücke zueinander angeordnete Klingen aufweist. Der Antrieb der Welle erfolgt über einen Schnurzug, wobei das Gerät in der einen Hand frei gehalten wird und mit der anderen Hand am Schnurzug gezogen werden muss. Das Schneidgut kann zur Erzielung eines homogeneren Schneidergebnisses zwischen den Zügen am Schnurzug durch Schütteln des Gerätes gemischt werden. Es lässt sich wiederum nur wenig Schneidgut, das vorgängig noch zerkleinert werden muss, zwischen die Klingen und unter die frei in den Schneidgutbehälter ragende messertragende Welle einfüllen. Wird zu viel oder zu grosses Schneidgut in den Schneidgutbehälter gefüllt, so kann es beim Ziehen am Schnurzug zum Blockieren des Gerätes kommen, da alle vier Klingen gleichzeitig einschneiden.

### HINTERGRUND DER ERFINDUNG

Der Erfindung liegt die Aufgabe zu Grunde, eine beispielsweise als Schneideinheit konzipierte Arbeitseinheit zu schaffen, welche in ein gattungsgemässes Gerät einbaubar ist, um die oben genannten Nachteile zu vermeiden und eine Bearbeitung von grösseren Mengen von schwierigem Bearbeitungsgut, beispielsweise Schneidgut, zum Beispiel hartes, faseriges und/oder nasses Bearbeitungsgut, problemlos verarbeiten kann. Es ist eine weitere Aufgabe, dass auch bei mässigem Zerkleinerungsgrad eine hohe Gleichmässigkeit der Verarbeitung des Schneidguts gewährleistet sein soll. Ausserdem soll es sich ausser zum Schneiden oder Hacken für weitere Bearbeitungsschritte von Nahrungsmitteln einsetzen lassen und mit wenig Kraftaufwand einfach, sicher und bequem zu bedienen und zu reinigen sein.

Diese Aufgabe wird durch eine Arbeitseinheit mit den Merkmalen des Anspruchs 1 beziehungsweise einem Gerät mit den Merkmalen des Anspruchs 15 gelöst.

In einer bevorzugten Ausführungsform der erfindungsgemässen Arbeitseinheit für ein Gerät zum Bearbeiten von Lebensmitteln, umfasst diese Antriebseinheit mindestens zwei auf einer Arbeitsachse A angeordnete und in Umfangsrichtung der Arbeitsachse A wirkende Arbeitsmittel, wobei mindestens ein Arbeitsmittel relativ zum mindestens einen weiteren Arbeitsmittel innerhalb eines begrenzten Schwenkwinkels um die Arbeitsachse A schwenkbar ist.

In einer weiteren Ausführungsform der erfindungsgemässen Arbeitseinheit wird die Arbeitsachse (A) durch eine Tragachse definiert.

In einer weiteren Ausführungsform der erfindungsgemässen Arbeitseinheit sind die Arbeitsmittel aus der folgenden Gruppe ausgewählt sind oder Kombinationen davon umfassen: Klingen zum Schneiden und/oder Quetschen, Finger zum Kneten oder Schälen, Schläger zum Schäumen.

In einer weiteren Ausführungsform der erfindungsgemässen Arbeitseinheit ist diese als Schneideinheit ausgebildet und weist mindestens eine erste Klinge auf, welche verdrehsicher an der Tragachse angeordnet ist. Zudem weist sie mindestens eine zweite Klinge auf, welche relativ zur ersten Klinge aus einer Ruhestellung um die gemeinsame Arbeitsachse A vorzugsweise um 180° in eine Schneidstellung schwenkbar ist.

In einer weiteren Ausführungsform der erfindungsgemässen Arbeitseinheit ist diese als Schneideinheit ausgebildet und weist mindestens eine erste Klinge auf, welche verdrehsicher an einer Tragachse angeordnet ist. Zudem weist sie mindestens eine zweite Klinge auf, welche vorzugsweise um 120° relativ zur ersten Klinge aus einer Ruhestellung um die gemeinsame Arbeitsachse A in eine Schneidstellung schwenkbar ist. Überdies weist diese Arbeitseinheit mindestens eine dritte Klinge auf, welche vorzugsweise um 240° relativ zur ersten Klinge aus einer Ruhestellung um die gemeinsame Arbeitsachse A in eine Schneidstellung schwenkbar ist.

In einer weiteren Ausführungsform der erfindungsgemässen Arbeitseinheit ist diese als Schneideinheit ausgebildet, wobei diesmal mindestens zwischen einer ersten Klinge und einer zweiten Klinge ein Zwischenstück derart angeordnet ist, dass der Schwenkwinkel der zweiten Klinge gegenüber der ersten Klinge auf mehr als 360° vergrössert ist.

In einer weiteren Ausführungsform der erfindungsgemässen Arbeitseinheit ist diese Arbeitseinheit als Schneideinheit ausgebildet und weist mindestens eine erste Klinge auf, welche verdrehsicher an der Tragachse angeordnet ist. Überdies weist sie mindestens eine zweite Klinge auf, welche vorzugsweise um 480° relativ zur ersten Klinge aus einer Ruhestellung um die gemeinsame Arbeitsachse A in eine Schneidstellung schwenkbar ist. Zudem weist sie mindestens eine dritte Klinge auf, welche vorzugsweise um 960° relativ zur ersten Klinge aus einer Ruhestellung um die gemeinsame Arbeitsachse (A) in eine Schneidstellung schwenkbar ist.

In einer weiteren Ausführungsform der erfindungsgemässen Arbeitseinheit lassen sich alle Klingen in deren Ruhestellungen in Richtung der Arbeitsachse A gesehen übereinander liegend anordnen.

In einer weiteren Ausführungsform der erfindungsgemässen Arbeitseinheit sind deren Klingen im Wesentlichen radial zur Arbeitsachse A ausgerichtet sind.

In einer weiteren Ausführungsform der erfindungsgemässen Arbeitseinheit sind oberhalb und/oder unterhalb der Arbeitsmittel ein Abweiser mit mindestens je einem in Umfangsrichtung der Arbeitsachse (A) wirkenden Abweiserflügel angeordnet. Diese Abweiser drehen im Betrieb der Arbeitseinheit mit der Tragachse mit, um das zu bearbeitende Gut, das beim Rotieren der Arbeitseinheit um die Arbeitsachse A nach oben oder unten aus dem Wirkbereich der Arbeitsmittel geschleudert wird, zurück in ebendiesen Wirkbereich zu fördern.

In einer weiteren Ausführungsform der erfindungsgemässen Arbeitseinheit sind die Abweiser im Wesentlichen radial zur Arbeitsachse A ausgerichtet.

In einer weiteren Ausführungsform der erfindungsgemässen Arbeitseinheit ist ein unterer Abweiser drehmomentschlüssig und lösbar an einem in Richtung der Arbeitsachse A gesehenen unteren Ende der Arbeitseinheit befestigbar.

In einer weiteren Ausführungsform der erfindungsgemässen Arbeitseinheit sind die Arbeitsmittel in Richtung der Arbeitsachse A mit einem axialen Abstand zueinander angeordnet.

In einer weiteren Ausführungsform der erfindungsgemässen Arbeitseinheit sind die Klingen in Richtung der Arbeitsachse A gesehen, näher beim unteren Ende der Arbeitseinheit angeordnet, als beim gegenüberliegenden oberen Ende der Arbeitseinheit.

In einer bevorzugten Ausführungsform eines Gerätes zum Bearbeiten von Lebensmitteln, weist dieses Gerät ein Oberteil, eine Antriebseinheit, einen Unterteil mit einem Arbeitsbehälter sowie einer mittels der Antriebseinheit antreibbare Arbeitseinheit mit den soeben genannten Merkmalen auf.

In einer weiteren Ausführungsform des Gerätes ist dessen Antriebseinheit manuell oder elektrisch betreibbar.

In einer weiteren Ausführungsform des Gerätes stehen dessen Antriebseinheit und dessen Arbeitseinheit über eine lösbare drehmomentschlüssige Verbindung miteinander in einer Wirkverbindung.

In einer weiteren Ausführungsform des Gerätes umfasst dessen manuell betreibbare Antriebseinheit einen Kurbelantrieb, bevorzugt einen Schnurzugantrieb.

In einer weiteren Ausführungsform des Gerätes steht eine durch Zug an einer Zugschnur des Schnurzugantriebes in Drehbewegung versetzbare Haspel über ein Getriebe mit einem Mitnehmer derart in einer Wirkverbindung, dass ein resultierendes Drehzahlübersetzungsverhältnis grösser als 1, vorzugsweise 1.8 bis 1.9 misst.

In einer weiteren Ausführungsform des Gerätes ist dessen Haspel drehmomentschlüssig und drehbar mit einem Treibrad auf einer exzentrisch zur Arbeitsachse A verlaufenden, innenseitig von einem Deckel des Oberteils abstehenden Deckelachse gelagert. Die Drehbewegung des Treibrades ist in der Folge auf ein koaxial zur Arbeitsachse A verlaufend angeordnetes Axialrad übertragbar.

In einer weiteren Ausführungsform des Gerätes greift eine Innenverzahnung des Treibrades in eine Aussenverzahnung des Axialrades ein.

In einer weiteren Ausführungsform des Gerätes, dessen Arbeitsbehälter ein im Wesentlichen rotationssymmetrisches Gefäss zur Aufnahme von zu bearbeitendem Gut ist und dessen Arbeitseinheit drehbar in diesem Arbeitsbehälter gelagert ist.

In einer weiteren Ausführungsform des Gerätes ist dessen Arbeitseinheit - in Richtung der Arbeitsachse A gesehen - mit einem oberen Ende der Arbeitseinheit, welches drehmomentschlüssig mit der Antriebseinheit in Wirkverbindung steht sowie ein dem oberen Ende abgewandtes unteres Ende aufweist, welches drehbar am Boden des Arbeitsbehälters gelagert ist, gelagert.

In einer weiteren Ausführungsform des Gerätes wird ein gewünschter Bearbeitungsgrad der Lebensmittel mit einer bestimmten Anzahl von Arbeitstakten, welcher vorzugsweise mit einer bestimmten Anzahl von Umdrehungen der Antriebseinheit beziehungsweise derjenigen der Arbeitseinheit korreliert, durch eine Elektronikeinheit erfasst und dem Benutzer des Gerätes mittels einer Anzeigeeinheit angezeigt.

In einer weiteren Ausführungsform des Gerätes werden die Elektronikeinheit und die Anzeigeeinheit über einen mittels der Antriebseinheit und/oder der Arbeitseinheit angetriebenen Generator mit Strom versorgt.

In einer weiteren Ausführungsform des Gerätes umfasst die Anzeigeeinheit drei Leuchtdioden in unterschiedlichen Farben, vorzugsweise in den Farben grün, gelb und rot.

### KURZBESCHREIBUNG DER FIGUREN

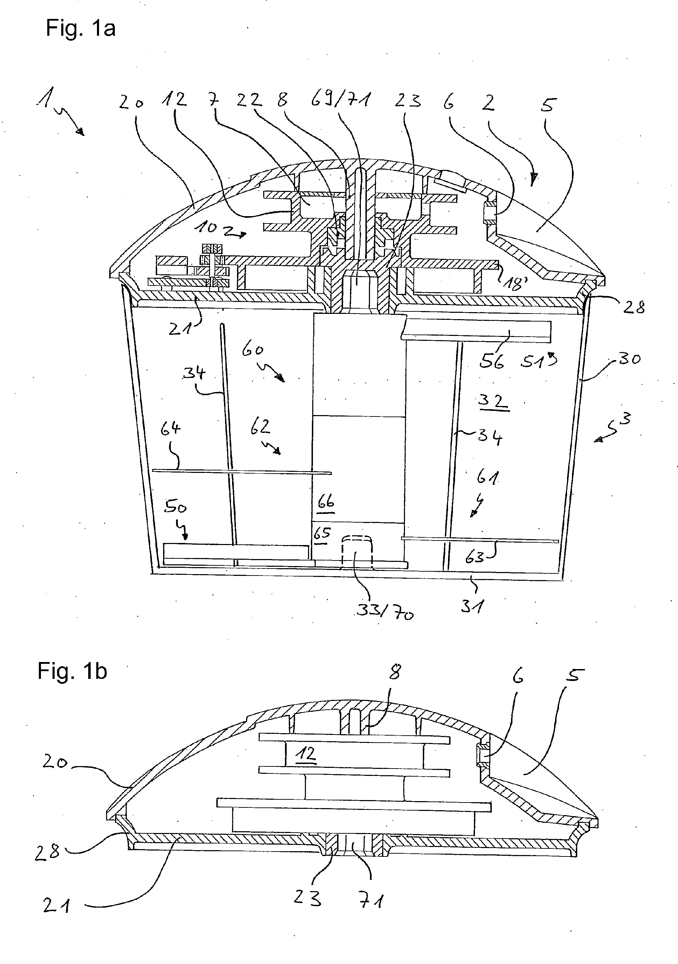

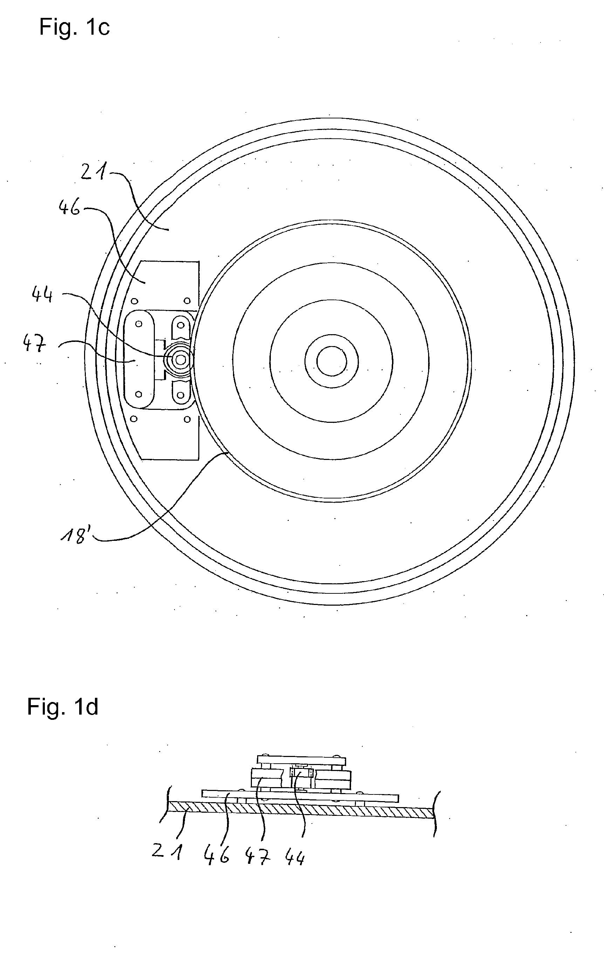

Anhand von Figuren, welche lediglich Ausführungsbeispiele darstellen, wird die Erfindung im Folgenden erläutert. Es zeigen
- Fig. 1 a: einen Längsschnitt entlang einer Arbeitsachse A durch das Gerät gemäss einer ersten Ausführungsform, wobei eine als Schneideinheit ausgebildete nicht im Schnitt dargestellt ist;
- Fig. 1 b: einen Schnitt durch einen Oberteil gemäss Figur 1a, wobei Teile einer Antriebseinheit nicht geschnitten dargestellt sind;
- Fig. 1 c: eine Draufsicht auf den Oberteil gemäss Figur 1a, wobei ein Deckel weggelassen ist;
- Fig. 1 d: eine Seitenansicht auf eine Generatoreinheit zum Einbau in einen Oberteil gemäss Figur 1a;
- Fig. 2a: eine Explosionsdarstellung einer als Schneideinheit ausgebildeten Arbeitseinheit, gemäss einer Ausführungsform der Erfindung;
- Fig. 2b: eine Seitenansicht der Schneideinheit gemäss Figur 2a im zusammengebauten Zustand mit Klingen in Arbeitsstellung;
- Fig. 2c: eine Sicht von oben B auf die Schneideinheit gemäss Figur 2b;
- Fig. 2d: eine Sicht von unten A auf die Schneideinheit gemäss Figur 2b;
- Fig. 2e: eine Sicht von schräg unten auf die Schneideinheit gemäss Figur 2b, wobei eine Ruheposition einer zweiten Klinge strichliniert angedeutet ist;
- Fig. 2f: einen Querschnitt entlang X-X durch die die Schneideinheit gemäss Figur 2b, wobei eine Arbeitsposition einer zweiten Klinge strichliniert und eine Schwenkrichtung mit einem Pfeil angedeutet und ein unterer Abweiser weggelassen ist;
- Fig. 2g: einen Querschnitt gemäss Figur 2f, wobei die zweite Klinge in eine Ruheposition über einer ersten Klinge geschwenkt und der untere Abweiser wiederum weggelassen ist;

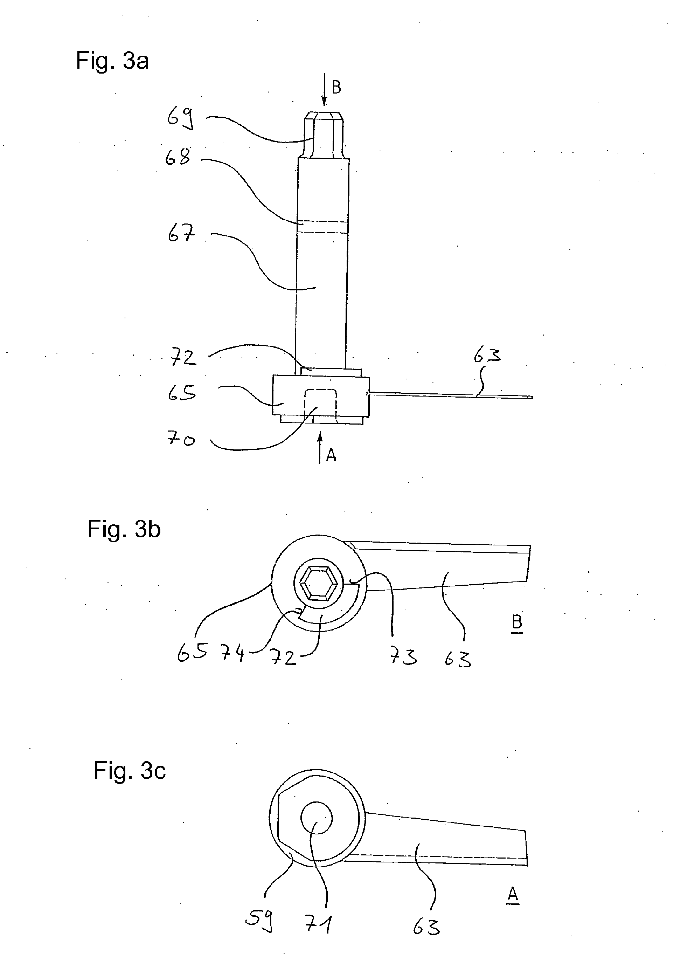

- Fig. 3a: eine Seitenansicht eines ersten Messers mit Tragachse;
- Fig. 3b: eine Sicht von oben B auf das Messer gemäss Figur 3a;
- Fig. 3c: eine Sicht von unten A auf das Messer gemäss Figur 3a;
- Fig. 4a: eine Seitenansicht einer oberen Abweisereinheit;
- Fig. 4b: eine Seitenansicht auf eine Abweisereinheit gemäss Figur 4a um 90° gedreht, so dass ein Abweiserflügel zum Betrachter weist;
- Fig. 4c: eine Sicht von oben auf die Abweisereinheit gemäss Figur 4a;
- Fig. 5a: eine Seitenansicht einer unteren Abweisereinheit;
- Fig. 5b: eine Seitenansicht auf eine Abweisereinheit gemäss Figur 5a um 90° gedreht, so dass ein Abweiserflügel zum Betrachter weist;
- Fig. 5c: eine Sicht von oben auf die Abweisereinheit gemäss Figur 5a;
- Fig. 6a: einen Längsschnitt entlang der Arbeitsachse A durch das Gerät gemäss einer weiteren Ausführungsform, wobei eine als Schneideinheit ausgebildete Arbeitseinheit nicht im Schnitt dargestellt ist;
- Fig. 6b: einen Schnitt durch einen Oberteil gemäss Figur 6a;
- Fig. 6c: einen Schnitt durch einen Unterteil des Gerätes gemäss Figur 6a mit eingesetzter Schneideinheit, wobei die Schneideinheit nicht im Schnitt dargestellt ist;
- Fig. 6d: eine Seitenansicht auf die Schneideinheit gemäss Figur 6a;
- Fig. 6e: eine Sicht von oben auf den Oberteil gemäss Figur 6a;
- Fig. 6f: einen Teilschnitt entlang D durch eine Behälterwand mit Rippe eines Gerätes gemäss Figur 6a;
- Fig. 7a: eine Seitenansicht eines ersten Messers mit Tragachse gemäss einer weiteren Ausführungsform;
- Fig. 7b: eine Sicht von oben auf das erste Messer gemäss Figur 7a;
- Fig. 7c: eine Sicht von unten auf das erste Messer gemäss Figur 7a;
- Fig. 8a: eine Seitenansicht eines zweiten Messers gemäss einer weiteren Ausführungsform;
- Fig. 8b: eine Sicht von oben auf das zweite Messer gemäss Figur 8a;
- Fig. 8c: eine Sicht von unten auf das zweite Messer gemäss Figur 8a;
- Fig. 9a: eine Seitenansicht eines dritten Messers;
- Fig. 9b: eine Sicht von oben auf das dritte Messer gemäss Figur 9a;
- Fig. 9c: eine Sicht von unten auf das erste Messer gemäss Figur 9a;
- Fig. 10a: eine Seitenansicht eines oberen Abweisers gemäss einer weiteren Ausführungsform;
- Fig. 10b: eine Sicht von oben auf den Abweiser gemäss Figur 10a;
- Fig. 10c: eine Seitenansicht aus Richtung I auf eine Abweisereinheit gemäss Figur 10a um 90° gedreht, so dass ein Abweiserflügel zum Betrachter weist;
- Fig. 11: eine Seitenansicht einer Schneideinheit gemäss einer weiteren Ausführungsform im zusammengebauten Zustand mit Klingen und Abweiser gemäss den Figuren 7 bis 10 in Arbeitsstellung;
- Fig. 12a: einen Längsschnitt entlang der Arbeitsachse A durch das Gerät gemäss einer weiteren Ausführungsform, wobei eine Schneideinheit nicht im Schnitt dargestellt ist;
- Fig. 12b: einen Schnitt durch einen Oberteil gemäss Figur 12a;
- Fig. 13a: eine als Schneideinheit ausgebildete Arbeitseinheit gemäss einer weiteren Ausführungsform, wobei die untere Abweisereinheit weggelassen ist;
- Fig. 13b: eine Sicht von oben auf die Schneideinheit gemäss Figur 13a;
- Fig. 14a: eine Seitenansicht eines ersten Messers mit Tragachse gemäss Figur 13a;
- Fig. 14b: eine Sicht von oben auf ein erstes Messer gemäss Figur 13a;
- Fig. 14c: eine Sicht von unten auf ein erstes Messer gemäss Figur 13a;
- Fig. 15a: eine Seitenansicht eines zweiten Messers gemäss Figur 13a;
- Fig. 15b: eine Sicht von oben auf ein zweites Messer gemäss Figur 13a;
- Fig. 15c: eine Sicht von unten auf ein zweites Messer gemäss Figur 13a;
- Fig. 16a: eine Seitenansicht eines drittes Messers gemäss Figur 13a;
- Fig. 16b: eine Sicht von oben auf ein drittes Messer gemäss Figur 13a;
- Fig. 16c: eine Sicht von unten auf ein drittes Messer gemäss Figur 13a;
- Fig. 17a: eine Seitenansicht eines Zwischenstück gemäss Figur 13a;
- Fig. 17b: eine Sicht von oben auf ein Zwischenstück gemäss Figur 13a;
- Fig. 17c: eine Sicht von unten auf ein Zwischenstücks gemäss Figur 13a;
- Fig. 18a: eine Seitenansicht einer oberen Abweisereinheit gemäss Figur 13a;

- Fig. 18b: eine Sicht von oben auf eine oberen Abweisereinheit gemäss Figur 13a;
- Fig. 18c: eine Teilansicht eines Schnittes durch eine obere Abweisereinheit gemäss Figur 18b; und
- Fig. 18d: eine Vorderansicht einer oberen Abweisereinheit gemäss Figur 13a.

### DETAILLIERTE BESCHREIBUNG BEVORZUGTER AUSFÜHRUNGSFORMEN

In der Figur 1a ist eine erste Ausführungsform des erfindungsgemässen Gerätes 1 zum Bearbeiten von Nahrungsmitteln im axialen Längsschnitt dargestellt, wobei eine Arbeitseinheit 60 als Schneideinheit 60 ausgebildet und nicht im Schnitt gezeigt ist. Das Gerät 1 ist im Wesentlichen rotationssymmetrisch und weist einen Oberteil 2 auf, der eine kreisrunde im Wesentlichen plane Basis 21 mit einem aufgesetzten, gewölbten Deckel 20 umfasst. Zwischen Deckel 20 und Basis 21 sind wesentliche Anteile einer Antriebseinheit 10 untergebracht. Der Oberteil 2 lässt sich form- und/oder kraftschlüssig auf einen Unterteil 3 aufsetzen, der im vorliegenden Beispiel einen kreisrunden schüsselförmigen als Schneidgutbehälter 30 gestalteten Arbeitsbehälter 30 umfasst. Der Schneidgutbehälter 30 ist vorzugsweise aus einem transparenten oder halbtransparenten lebensmittelzulässigen Kunststoffmaterial gefertigt und umfasst einen Boden 31 mit einem zentralen nach oben gerichteten Lagerzapfen 33 und eine Seitenwand 32 mit einer Mehrzahl von vertikalen gleichmässig über den Umfang verteilten Verwirbelungsrippen 34. Die Schneideinheit 60 ist an einer Unterseite mit einer zentralen Lageröffnung 70 versehen, mit der sie sich auf den Lagerzapfen 33 im Schneidgutbehälter stecken lässt. Die Schneideinheit 60 gemäss der dargestellten Ausführungsform wird im Wesentlichen von einer mehrteiligen Welle gebildet, von der zwei Klingen 63, 64 und zwei Abweiser 50, 51 als Wirkmittel - nachfolgend auch Arbeitsmittel genannt - in Umfangsrichtung gesehen im Wesentlichen radial zu einer Arbeitsachse A abstehen. Unter Welle wird dabei ein im Wesentlichen kreiszylinderförmiger Abschnitt des Arbeitsmittels 60 verstanden, wodurch die Arbeitsachse A definiert ist. Ein oberseitiger Antriebsnocken 69, im dargestellten Ausführungsbeispiel ein Nocken mit Aussensechskant, der Schneideinheit 60 greift formschlüssig in eine korrespondierende Aufnahmeöffnung 71 eines Mitnehmers 23 der Antriebseinheit ein, so dass sich das Drehmoment vom Mitnehmer 23 der Antriebseinheit 10 auf die Schneideinheit übertragen lässt. Die Welle mit den Wirkmitteln ist auf diese Weise endseitig an der Ober- und Unterseite sicher gelagert und kann die beim Betrieb in die Wirkmittel, im vorliegenden Beispiel in die Messer 61, 62 und die Abstreifer 50, 51, eingeleiteten Kräfte auch bei hohen Drehzahlen problemlos aufnehmen, ohne aus ihrer axialen Position gelenkt zu werden. Die Drehbewegung wird im dargestellten Ausführungsbeispiel mit einem Schnurzugmechanismus erzeugt. Schnur und Handgriff sind in der Figur 1 jeweils nicht gezeichnet. Der Handgriff kommt bei aufgewickelter Schnur in der Aussparung 5 am Deckel 20 zu liegen und die an ihm befestigte Schnur wird durch die Durchführöffnung 6 reibungsarm einer im Inneren des Oberteils 2 angebrachten Haspel oder Schnurrolle 12 zugeführt. Konzentrisch zur Haspel 12 ist ein Federgehäuse 7 auf einer zentral vom Deckel 20 in Richtung der Arbeitsachse A nach unten stehend angeformten Deckelachse 8 angeordnet. Im Federgehäuse befindet sich eine ebenfalls nicht gezeichnete Rückholfeder, deren Funktion in Zusammenhang mit dem Schnurzugmechanismus bekannt ist und nicht weiter erklärt werden muss. Durch Ziehen am Schnurzug wird die Haspel in Drehung versetzt und die Feder wird während dieser Drehung in Arbeitsrichtung vorgespannt, bis die Schnur, vorzugsweise nach 3 bis 6 Umdrehungen der Haspel vollständig abgewickelt ist. Die Drehbewegung der Haspel 12 wird während der Arbeitsdrehung auf ein der Antriebseinheit 10 zugeordnetes, oberes Kupplungsteil 22 übertragen, das drehmomentschlüssig axial verschiebbar auf der Deckelachse 8 angeordnet ist und mit der Haspel 12 in Wirkverbindung steht. In der Figur 1 a befindet sich das obere Kupplungsteil 22 in einer oberen Freigabeposition, in der es mit seiner unterseitigen Gegenverzahnung nicht in die entsprechende Verzahnung eines dem Unterteil 3 zugewandten, unteren Kupplungsteils, auch Mitnehmer 23 genannt, eingreift. Durch eine in der Figur nicht dargestellte Feder ist der obere Kupplungsteil 22 gegen den Mitnehmer 23 vorgespannt, so dass über den Formschluss der ineinander greifenden Zähne beider Kupplungsteile während der Drehung in Arbeitsrichtung das Drehmoment des oberen Kupplungsteils auf den Mitnehmer übertragen werden kann. Da im dargestellten Ausführungsbeispiel für die nachgeschalteten Arbeitsmittel nur eine Drehung in Arbeitsrichtung erwünscht ist, ist die Kupplung mit einem einsinnigen Freilauf in Rückstellrichtung, also gegen die Arbeitsrichtung versehen. Die Zähne sind, wie von anderen Ratschenmechanismen bekannt, gegensinnig einseitig angeschrägt, so dass der obere Kupplungsteil 22 während der Rückholdrehung des Schnurzuges in die obere Freigabeposition gedrückt werden kann und die Schneideinheit während dem Aufwickeln der Zugschnur stillstehen kann. Beim nächsten Zug am Handgriff wird der obere Kupplungsteil 22 wieder in die Arbeitsrichtung gedreht und er greift wiederum in den Mitnehmer 23 ein, so dass dieser die Drehbewegung in Arbeitsrichtung fortsetzen kann. Durch die drehmomentschlüssige Verbindung, im vorliegenden Ausführungsbeispiel mittels Innen- und Aussensechskant realisiert, zwischen Aufnahmeöffnung 71 des Mitnehmers 23 und dem oberseitigen Antriebsnocken 69 der Tragwelle 67, wird die Drehbewegung von der Antriebseinheit 1:1 auf die Schneideinheit 60 übertragen.

Die Basis 21 des Oberteils weist eine zentrale kreisrunde Öffnung auf, in der der im Wesentlichen zylindrische Mitnehmer mit passendem Sitz drehbar gelagert ist. Da die Aufnahmeöffnung 71 als Blindloch ausgebildet ist und die Basis 21 ansonsten keine weiteren Öffnungen umfasst, lassen sich die Bereiche des Oberteils, die mit den zu bearbeitenden Lebensmitteln in Berührung kommen, sehr gut reinigen. Im peripheren Bereich ist die Basis umlaufend dicht und fest mit dem Deckel verbunden, so dass vermieden wird, dass Nahrungsmittelreste oder Wasser in den Innenraum des Oberteils 2 dringen können.

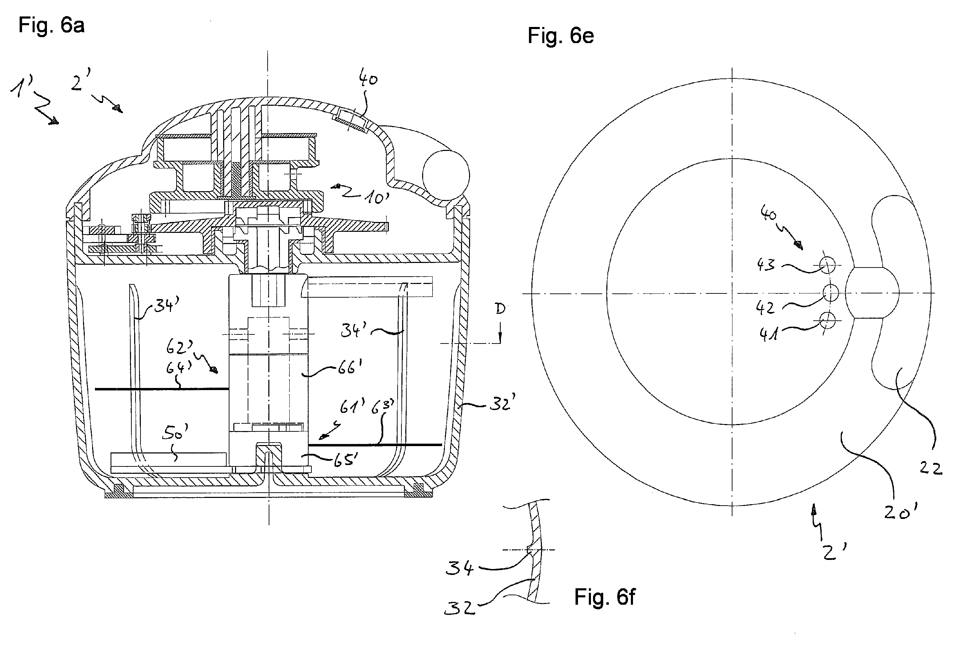

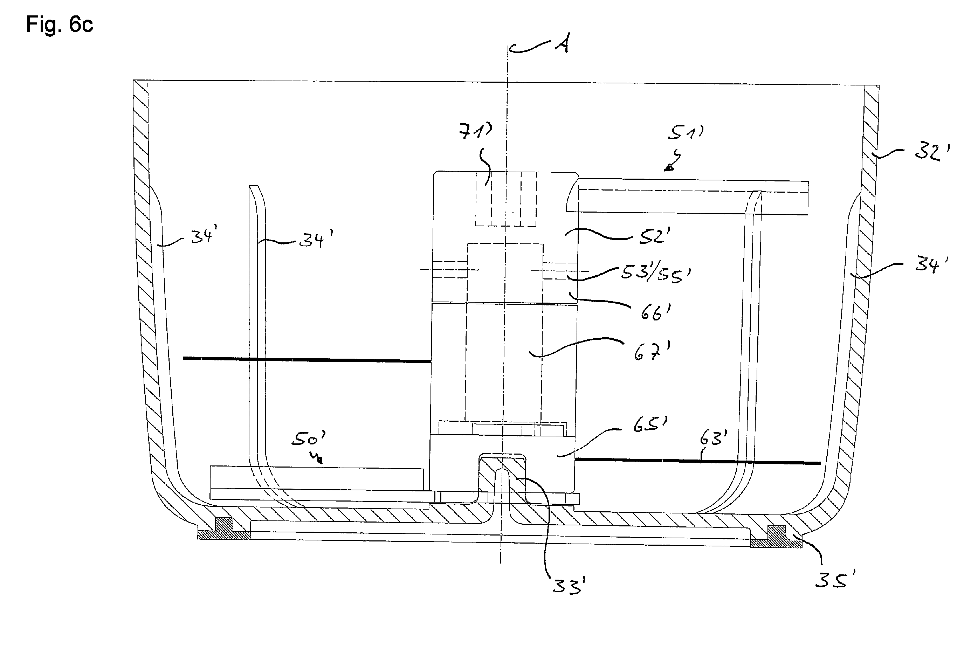

Im Ausführungsbeispiel der Figur 1a ist die Basis 21 mit einer peripheren umlaufenden Seitenwand 28 versehen, die eine Aussenkontur aufweist, die das form- und/oder kraftschlüssige Aufsetzen des Oberteils 2 auf den Schneidgutbehälter 30 erlaubt. Die lichte Höhe zwischen der Unterseite des Mitnehmers 23 und dem Boden 31 des Schneidgutbehälters 30 entspricht im Wesentlichen der Höhe der Schneideinheit 60 ohne deren oberseitigen Antriebsnocken 69. Die obere und untere Lagerung der Schneideinheit ist jeweils derart formschlüssig und/oder geschützt ausgebildet, dass kein Schneidgut eindringen und sich festsetzen kann. An der Unterseite des Behälterbodens 31' ist, wie in Figur 6c angedeutet, vorzugsweise eine Rutschsicherung aus einem weichen Gummi oder Silikonmaterial angebracht. Die gleichmässig über den Umfang der inneren Behälterwand verteilten vertikalen Verwirbelungsrippen 34' erstrecken sich vom Boden des Behälters bis annähernd auf eine Umlauf höhe des oberen Abweiserflügels 56'. Die in der Figur 6f im Teilschnitt durch die Behälterwand 32' dargestellten Verwirbelungsrippen 34' ragen wenige mm radial nach innen in den Behälter, wobei sie so auf die Länge der Klingen und der Abweiserflügel angepasst sind, dass diese zwar nahe an den Verwirbelungsrippen 34' vorbeibewegt werden, diese aber keinesfalls berühren. Die Funktion der Verwirbelungsrippen 34' beim Schneiden oder Schälen von Gemüse oder Obst ist bekannt und muss hier nicht weiter erläutert werden.

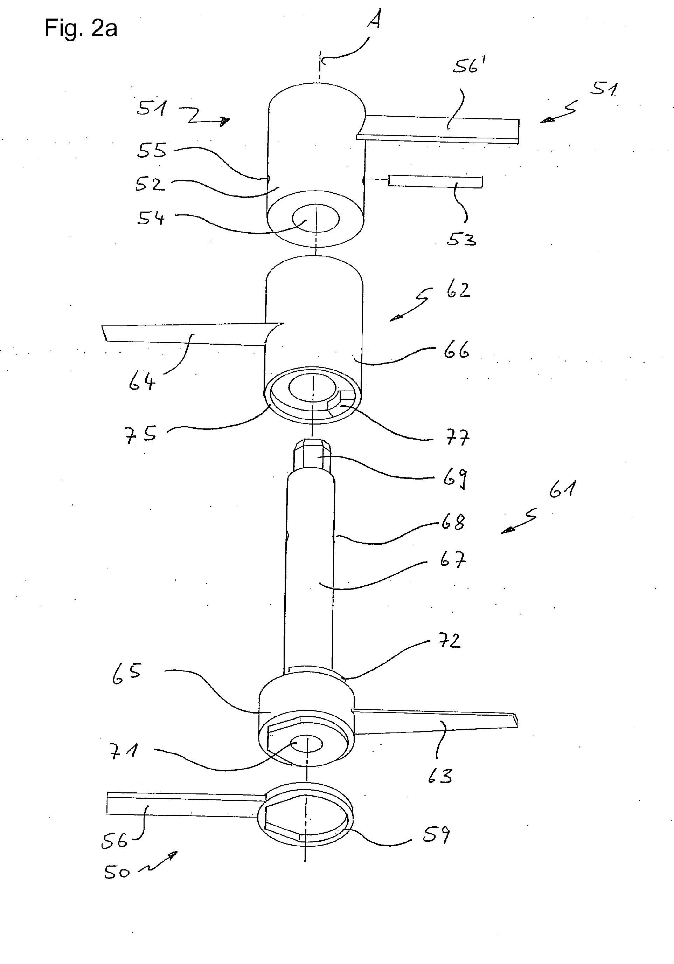

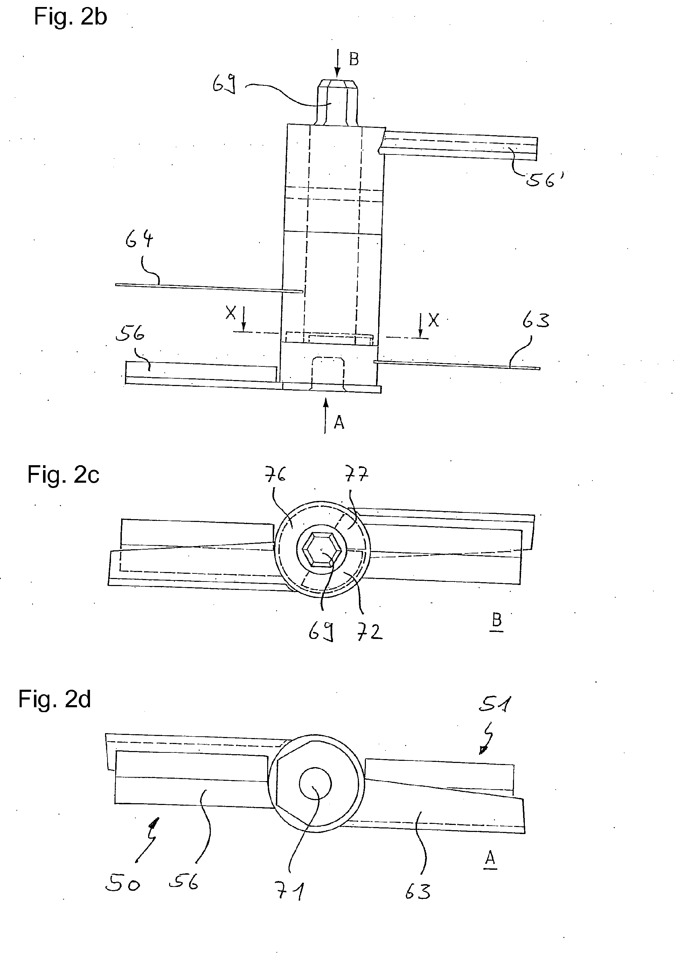

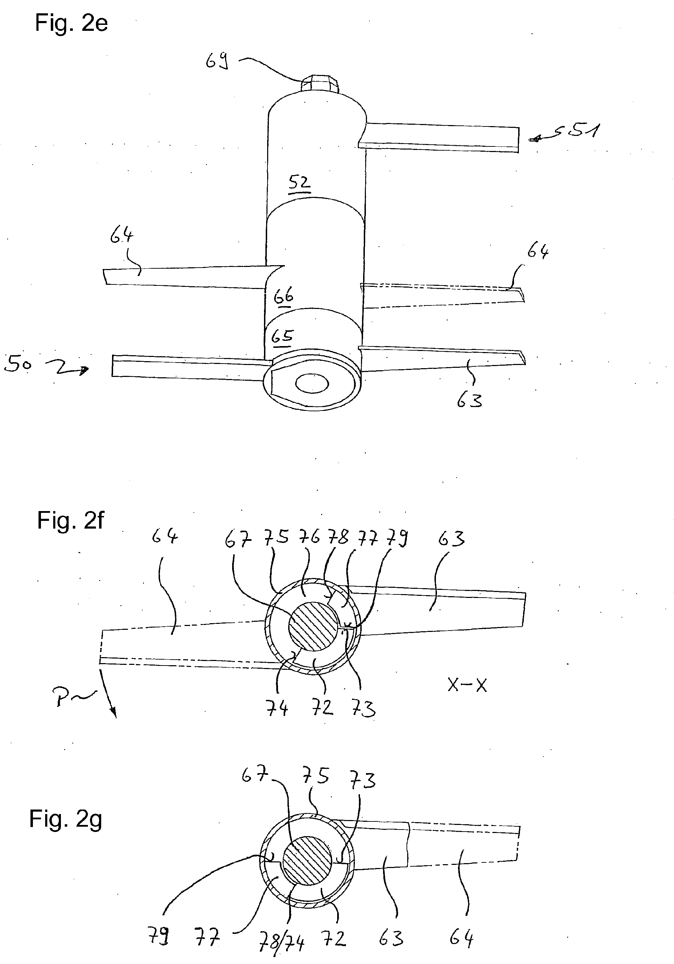

Anhand der Schneideinheit der Figur 2 sollen im Folgenden nun die wesentlichen Aspekte der neuen Arbeitseinheiten 60 näher erläutert werden. Aus der Explosionszeichnung der Figur 2a geht hervor, dass die Schneideinheit 60 ein erstes Messer 61 und ein zweites Messer 62 umfasst, die relativ zueinander um einen vorgegebenen Schwenkwinkel um die gemeinsame Achse A verschwenkbar sind. Die beiden Messer 61, 62 sind vorzugsweise als erstes, unteres Messer 61 und oberes, zweites Messer 62, in Richtung der Arbeitsachse A gesehen axial voneinander beabstandet und in axialer Richtung fest zueinander angeordnet. Ein basaler, im Wesentlichen zylindrischer Klingenhalter 65 des unteren Messers 61 trägt eine radial abstehende erste Klinge 63, die an einer Vorderkante mit einer Schneide versehen ist. Die Vorderkante ist die Kante der Klinge 63, die beim Schneiden, das heisst bei der Drehung in Arbeitsrichtung P, vorne liegt und dadurch mit dem Schneidgut in Kontakt kommt. Eine zentrale, die Arbeitsachse A definierende Tragachse 67, deren Durchmesser geringer ist als der Durchmesser des Klingenhalters 65, verläuft koaxial zum Klingenhalter 65, ist mit diesem fest verbunden und trägt an der Oberseite den Antriebsnocken 69. Das erste Messer 61 bestimmt mit seiner Höhe nicht nur die Höhe der gesamten Baugruppe der Schneideinheit 60, sondern sie stellt auch das Grundgerüst dar. Der Klingenhalter des zweiten Messers 62 ist ein Hohlzylinder, der sich auf die Tragachse 67 stecken lässt und vorzugsweise denselben Aussendruchmesser wie der erste Klingenhalter 65 hat. Der Innendurchmesser des zweiten Klingenhalters ist dem Durchmesser der Tragachse 67 entsprechend angepasst, so dass sich das zweite Messer 62 leicht drehen lässt. Als weiteres Element wird ein oberer Abweiser 51 mit seinem Halter 52 auf die Tragachse 67 gesteckt. Um den oberen Abweiser verdrehsicher und axial nicht verschiebbar an der Tragachse 67 zu befestigen, wird in dieser Ausführungsform ein Sicherungsstift oder Splint 53 durch korrespondierende Splintlöcher 55 und 68 in Halter 52 und Tragachse 67 gesteckt. Der Sicherungsstift 53 wird komplett in den Splintlöchern versenkt und ist in der Länge so auf den äusseren Durchmesser des Abweiserhalters 52 angepasst, dass die Sicherungsstiftenden beidseitig annähernd eine geschlossene Oberfläche mit der Mantelfläche des Halters 52 bilden. Dies hat sich bewährt, um das Festsetzen von Nahrungsmittelresten in kleinen schwer zugänglichen, und damit schwer zu reinigenden Aussparungen zu vermeiden. Aus diesem Grund hat es sich auch als vorteilhaft erwiesen, die Klingenhalter 65, 66 und den Halter 52 des oberen Abweisers 51 jeweils zylindrisch auszubilden und deren Durchmesser so zu wählen, dass sie eine fluchtende, gemeinsame Mantelfläche definieren. Der Kontaktbereich zwischen dem fest auf der Tragachse angeordneten Halter des oberen Abweisers 51 und dem begrenzt verdrehbaren Halter 66 des zweiten Messers ist im dargestellten einfachsten Fall als plane Ringfläche 72 gestaltet. Im Kontaktbereich zwischen den beiden Klingenhaltern 65 und 66 sind die für die begrenzte relative Drehbeweglichkeit der beiden Klingenhalter, und damit auch der beiden Klingen 63, 64 zueinander, verantwortlichen Mittel platziert. Im konkreten Ausführungsbeispiel der Figur 2 sind dies eine Radialrippe 72, die auf der Oberseite des Klingenhalters 65 sitzt und eine vordere und eine hintere Anschlagfläche 73, 74 definiert. Die Anschlagflächen sind im Wesentlichen radial zur Arbeitachse A ausgerichtet und schliessen einen Winkel von etwa 120° ein. Die Radialrippe 72 erstreckt sich nicht bis zum Rand der Oberseite des ersten Klingenhalters 65, so dass eine nach unten gezogene Schürze 75 des zweiten Klingenhalters auf der entsprechend geformten Oberseite des ersten Klingenhalters 65 aufliegen kann und die Radialrippe vollständig überdeckt. Die Schürze 75 definiert einen kreisringsegmentförmigen Ringspalt 76, in dem ein Anschlag 77 fest am zweiten Klingenhalter 66 angeordnet ist. Der Anschlag 77 ist als Gegenstück zur Radialrippe 72 ebenfalls mit einer vorderen und einer hinteren radialen Anschlagfläche ausgestattet, die aber anschlagseitig nur einen Winkel von 60° miteinander einschliessen. Aus den Figuren 2f und 2g, in denen die Schneideinheit 60 im Bereich des Ringspaltes 76 geschnitten ist, wird deutlich, wie die Dimensionierung der Rippe 72 und des Anschlags 77 die Lage der Ruhe- und der Arbeitspositionen beziehungsweise Arbeitsstellungen der Klinge 64 relativ zur ersten Klinge 63 beeinflusst. In Figur 2f befindet sich Klinge 64 (strichpunktiert dargestellt) in einer Arbeitsposition annähernd 180° gegenüber der ersten Klinge verschwenkt und der Pfeil P gibt die Drehrichtung der Klingen beim Schneiden an. In der Arbeitsstellung liegt die hintere Anschlagfläche 79 des Anschlags 77 an der vorderen Anschlagfläche 73 der Radialrippe 72 an und verhindert, dass die zweite Klinge 64 gegen die Arbeitsrichtung P geschwenkt werden kann. Die zweite Klinge 64 kann allerdings in Arbeitsrichtung um die Tragachse in eine 0° Ruhestellung geschwenkt werden, in der die zweite Klinge 64 über der ersten Klinge 63 zu liegen kommt. In dieser Ruhestellung liegt, wie in der Figur 2g dargestellt ist, die vordere Anschlagfläche 78 des Anschlags 77 an der hinteren Anschlagfläche 74 der Radialrippe 72 an und verhindert ein weiteres Verschwenken der ersten Klinge in Arbeitsrichtung über die Ruhestellung hinaus.

Während in der dargestellten Ausführungsform die relative Verschwenkbarkeit der Messer, respektive der Klingen zueinander durch die an den Klingenhaltern angeordneten Anschlagmittel vorgegeben und begrenzt ist, können diese Mittel in weiteren bevorzugten Ausführungsformen auch an einem Klingenhalter und einer gemeinsamen Achse angeordnet sein. So kann zum Beispiel die Schwenkbewegung auch durch einen nach innen ragenden Radialzapfen des Messerhalters beschränkt werden, der in eine um 180° umlaufende Radialnut in der Tragachse eingreift. In Ausführungsformen mit zwei oder mehr beweglichen Klingen erstrecken sich die Radialnuten beispielsweise entsprechend über 120° und 240° (bei zwei beweglichen Klingen und Arbeitspositionen in 120° und 240° Stellung relativ zur fixen Klinge) oder beispielsweise über 90°, 180°, 240° (bei drei beweglichen Klingen und Arbeitspositionen in 90°, 180°, 240° Stellung relativ zur fixen Klinge). Ein Vorteil der in der Figur 2 gezeigten Ausführungsform der Arbeitseinheit besteht darin, dass die Gestaltung der Anschlagmittel ein einfaches Zusammenstecken der Schneideinheit in axialer Richtung ermöglicht.

Die vorzugsweise aus nicht rostendem Stahl, zum Beispiel gehärtetem AISI 420 mit einer Gebrauchshärte von 48-50 HRC, gefertigten und einseitig zu einer Schneide angeschliffenen Klingen werden in bevorzugten Ausführungsformen beim spritzgusstechnischen Herstellen der Klingenhalter an der Basis umspritzt. Vorzugsweise sind alle weiteren Bauteile des Gerätes, mit Ausnahme des Schneidgradindikators und der Schnur, aus Kunststoffen wie SAN, POM und ABS im Spritzguss gefertigt, wobei diejenigen Teile, die mit den zu bearbeitenden Lebensmittel in Kontakt kommen natürlich lebensmittelzulässig sind.

Da die Klingen nur an ihren Vorderkanten mit Schneiden ausgerüstet sind, kann die zweite und jede weitere Klinge beispielsweise an der den Schneiden abgewandten Seite zum Befüllen des Schneidgutbehälters 30 vom Benutzer problemlos und ohne Verletzungsrisiko manuell in die Ruhestellung geschwenkt werden. In dieser Ruhestellung, wie sie in der Figur 2e mit der strichpunktierten zweiten Klinge dargestellt ist, liegen der obere Abweiser 51 und beide Klingen übereinander. Sind die Klingen und der obere Abweiserflügel in der gleichen Radialposition übereinander angeordnet, so steht der gesamte übrige Innenraum des Schneidgutbehälters 30 zum einfachen Befüllen zur Verfügung.

Während in den Figuren nur Ausführungsformen mit Messern mit jeweils einer annähernd rechtwinklig radial zur Arbeitsachse A abstehenden Klinge gezeigt sind, lässt sich die erfinderische Lehre auch mit Messern mit mehr als einer Klinge in die Praxis umsetzen. In einer derartigen Ausführungsform mit einem fixen und einem schwenkbeweglichen Messer sind an jedem Klingenhalter zwei einander gegenüberliegende Klingen angeordnet, so dass sich in Ruhestellung je eine Klinge jedes Messers in einer 0°- und einer 180°-Position befinden und die Klingen des beweglichen Messers in Arbeitsstellungen in 90°- und einer 240°-Position geschwenkt werden können. In weiteren möglichen Ausführungsformen ist zum Beispiel ein unterer fixer Klingenhalter mit mehr als einer Klinge versehen, wobei diese nur wenig beabstandet vom Behälterboden angeordnet sind, und zweite und oder weitere bewegliche Klingenhalter mit jeweils nur einer Klinge axial beabstandet über den fixen Klingen angeordnet sind. Sind die beweglichen Klingen in eine gemeinsame radiale Ruheposition geschwenkt, so steht bei einer solchen Konstruktion immer noch viel Volumen des Schneidgutbehälters zum Befüllen zur Verfügung. Obwohl in der vorgängigen Beschreibung stellvertretend für die verschiedenen Arbeitsmittel jeweils nur Klingen beschrieben sind, lässt sich die entsprechende technische Lehre auch auf Arbeitseinheiten mit weiteren Arbeitsmitteln wie stumpfen Pürierleisten, Schälfingern oder Rührstäben anwenden.

Bei bevorzugten handbetriebenen Ausführungsformen der Geräte gemäss der vorliegenden Erfindung beträgt der Durchmesser des Schneidgutbehälters zwischen 120 und 140 mm bei einer Höhe von 70 bis 90 mm. Bei den bekannten gattungsgleichen Geräten behindern die feststehenden Messerklingen das Einfüllen des Schneidgutes und zwingen den Nutzer, das Schneidgut vorgängig noch mit einem Messer zu zerkleinern. Da sich die Arbeitsmittel der Geräte gemäss der vorliegenden Erfindung zum Befüllen platzsparend in eine gemeinsame Ruhestellung anordnen lassen und der knapp über dem Boden angeordnete untere Abweiser 50 kaum Platz wegnimmt, wird der nutzbare freie Innenraum des Schneidgutbehälters nur noch durch die zentrale Welle beschränkt. Schon bei den kleineren manuell betriebenen Geräten lassen sich daher ganze Zwiebeln, Kohlrabi oder Fenchelknollen einfüllen. Die Tatsache, dass sich dieses grosse Schneidgut auch tatsächlich verarbeiten lässt, stellt einen weiteren wesentlichen Vorteil der vorliegenden Erfindung dar. Die schwenkbewegliche Lagerung von mindestens einer Schneidklinge führt dazu, dass der Kraftaufwand beim Beginn einer jeden Schneidbewegung erheblich reduziert wird. Wird die Schneideinheit nach dem Befüllen des Schneidgutbehälters 30 erstmals angetrieben, so schneidet die unterste, fix am Klingenhalter 65 des ersten Messers 61 angeordnete Klinge 63 sobald sie auf das Schneidgut trifft. Die in Richtung der Arbeitsachse A axial versetzte, schwenkbar gelagerte zweite Klinge 64 trifft ebenfalls auf das zu schneidende Gut, wird aber durch die Trägheit des Schneidgutes relativ zur Tragachse 67 aus ihrer Ruheposition bis in die Arbeitsposition verschwenkt. Gegenüber dem Schneidgutbehälter ändert die zweite Klinge 64 in dieser Phase ihre Lage nicht, und beginnt sich erst zu drehen, sobald die Arbeitsposition erreicht ist, das heisst, sobald die erste fixe Klinge 63 eine halbe Umdrehung im Schneidgutbehälter 30 zurückgelegt hat. Sobald die Arbeitsposition erreicht ist, verhindern die Anschlagmittel 72, 77 ein weiteres Verschwenken des beweglichen Messers 62 und die Klinge 64 wird ruckartig in Bewegung in Drehrichtung P versetzt und zerschneidet das an ihr anliegende Schneidgut, wiederum unterstützt durch dessen Trägheit. Durch die verschwenkbare Lagerung der zweiten Klinge an der Tragachse wird in der Startphase der initiale Kraftaufwand für den Benutzer dieses Gerätes 1 erheblich reduziert, da nicht alle Klingen gleichzeitig anschneiden müssen.

In den oben genannten Beispielen sind nur Ausführungsformen mit einem fixen und einem schwenkbaren Arbeitsmittel (im Beispiel eine Klinge) beschrieben und in den Zeichnungen dargestellt. Das derart veranschaulichte Grundprinzip der neuen Schneidmechanik, lässt sich nun vom Fachmann auf eine Vielzahl von weiteren Geräten übertragen, ohne dabei vom Grundgedanken der Erfindung abzuweichen. Es lassen sich vorzugsweise Geräte mit einer fixen und zwei schwenkbeweglich an einer Tragachse angeordneten Klingen herstellen, bei denen die Klingen vorzugsweise alle in axialer Richtung voneinander beabstandet sind, und sich in Arbeitsstellung beispielsweise auf 0°, 120° und 240° Winkelstellungen um die Tragachse angeordnet befinden. Analog können gemäss der vorliegenden Erfindung beispielsweise Geräte mit vier Messern in 0°, 90°, 180° und 270°-Stellung hergestellt werden, wobei mit einem fixen und drei schwenkbeweglichen oder zwei fixen und zwei schwenkbeweglichen Klingen gearbeitet werden kann.

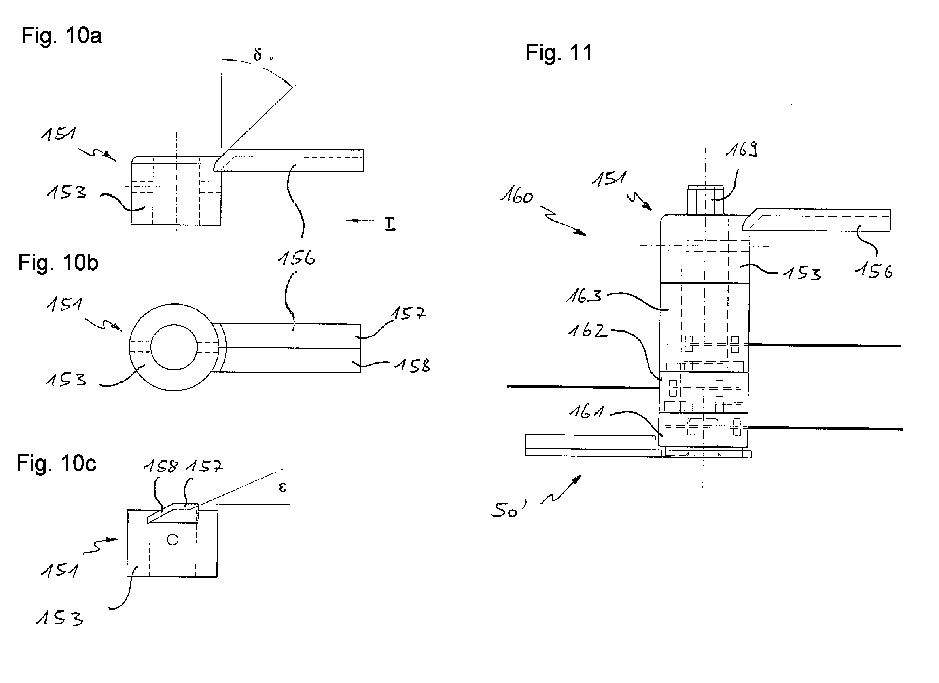

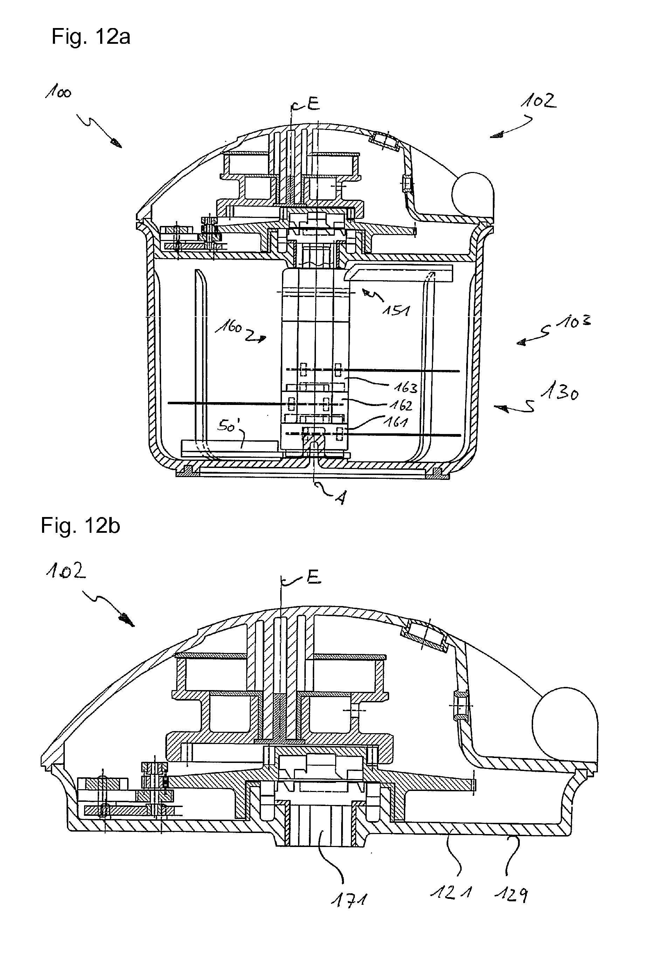

In der Figur 12 ist ein Gerät 100 mit drei Messern 161, 162, 163 und einem oberen Abweiser 151 gemäss einer weiteren bevorzugten Ausführungsform im Längsschnitt dargestellt, wobei die als Schneideinheit 160 ausgebildete Arbeitseinheit 160 selbst nicht geschnitten, sondern teilweise transparent dargestellt ist. Die Messer 161, 162, 163 befinden sich, wie vorgängig beschrieben, in Arbeitsstellung auf 0°, 120° und 240° Positionen um die Arbeitsachse A angeordnet, wobei die Klinge des untersten Messers in der selben Winkelstellung angeordnet ist, wie der obere Abweiserflügel 152. Um die vertikalen Abstände der Klingen zueinander und zu den Abweisern 50', 151 zu verdeutlichen, sind in den Figuren 11 und 12 die Klingen jeweils in einander gegenüberliegenden 0°- und 180°- Positionen dargestellt.

Der obere Abweiserflügel 152 ist, wie in Zusammenschau mit Figur 10a deutlich hervorgeht, gekröpft am Halter 153 angeordnet, so dass er knapp unter und im Wesentlichen parallel zu einer Unterseite 129 des Bodens 121 von Oberteil 102 entlang geführt wird.

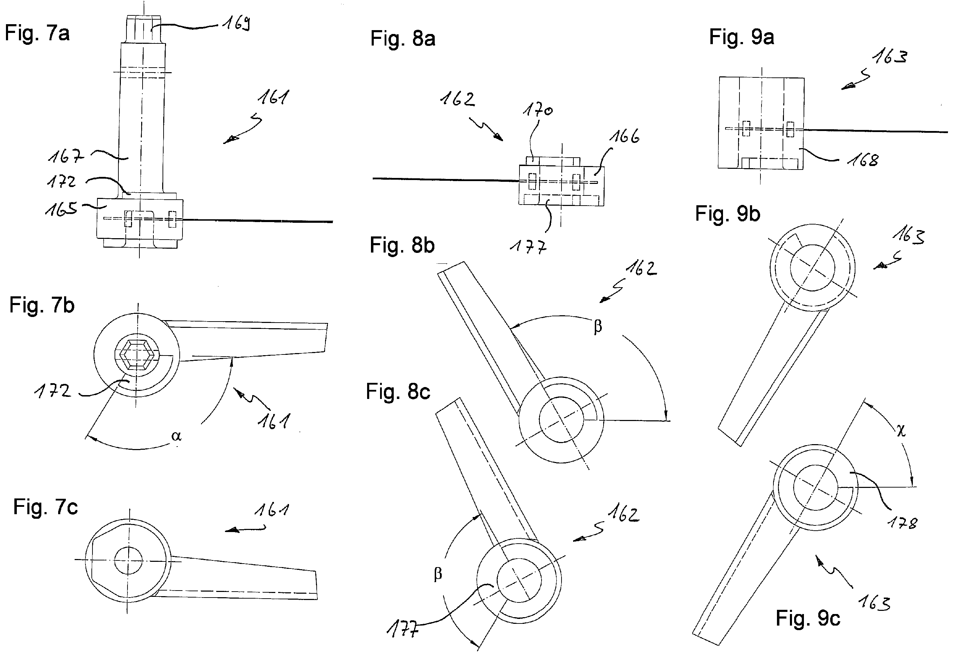

Der Aufbau der Schneideinheit 160, wie sie in der Figur 11 gezeigt ist, entspricht im Prinzip dem der bereits vorgängig im Detail beschriebenen Schneideinheit 60, die allerdings nur ein schwenkbeweglich an der Tragachse 167 angeordnetes Messer 162 umfasst. Im bevorzugten Ausführungsbeispiel der Figuren 7 bis 11 sind zwei bewegliche Messer 162, 163 (Figuren 8 und 9) an einer Tragwelle 167 eines ersten fixen Messers 161 (Figur 7) vorgesehen. Der Aufbau des ersten fixen Messers 161 entspricht im Wesentlichen dem Aufbau des vorgängig beschriebenen und dargestellten Messers 61. Diese Übereinstimmung ist vorteilhaft, da sich das erste fixe Messer 61 auf diese Weise für beide Ausführungsformen des erfindungsgemässen Gerätes 1, 100 nutzen lässt. Auch das zweite bewegliche Messer 162 entspricht im Wesentlichen dem ersten beweglichen Messer 62 der Schneideinheit 60 und der untere Abweiser 50 lässt sich ebenfalls für beide Ausführungsformen der Schneideinheit 60, 160 nutzen. Da sich die Bauhöhe der Schneideinheit 160 bis zum oberen Antriebsnocken 169 nicht wesentlich von derer der Schneideinheit 60 unterscheidet, ist die Bauhöhe des Halters 153 des oberen Abweisers 151 (Figur 10) gegenüber derer des Halters 52 von Abweiser 51 um die Höhe des ersten beweglichen Messers 162 (Figur 8) reduziert. Aus den Ansichten der Figuren 7, 8 und 9 sind wiederum die Mittel 172, 177 deutlich sichtbar, die die Schwenkbeweglichkeit der ersten und zweiten beweglichen Messer 162, 163 relativ zueinander und relativ zum ersten fixen Messer 163 begrenzen. Um deren Wirkung in der Ausführungsform mit drei Messern zu verdeutlichen sind in den Figuren 7b bis 9b und 7c bis 9c die drei Messer 161, 162 und 163 in den Ansichten von oben und von unten in ihrer jeweiligen relativen Winkelposition einer Arbeitsstellung nebeneinander dargestellt. Die Radialrippe 172 erstreckt sich an der Oberseite des Messerhalters 165 wiederum über einen Winkel α von 120°, und wirkt mit einem Anschlag 177, der sich über einen Winkel β von 120° an der Unterseite des Messerhalters 166 des ersten beweglichen Messers 162 erstreckt, zusammen, so dass dessen Klinge entgegen der Drehrichtung P der Schneideinheit 160 um 120° um die Arbeitsachse A schwenkbar ist, dann anschlägt und während der weiteren Drehung in Arbeitsrichtung in dieser 120° Arbeitsposition zum Schneiden gehalten wird. Analog wirkt eine Radialrippe 170, die sich auf der Oberseite des Messerhalters 166 des ersten beweglichen Messers 162 über einen Winkel β von 120° erstreckt, mit einem Anschlag 178, der sich über einen Winkel _{X} von 60° an der Unterseite des Messerhalters 168 des dritten beweglichen Messers 163 erstreckt, zusammen und erlaubt dessen Verschwenken um wiederum 120° um die Arbeitsachse A. Da sich die beiden Schwenkwinkel vom ersten und zweiten beweglichen Messer aufsummieren, kann das zweite bewegliche Messer gegenüber dem untersten fixen Messer aus einer Ruheposition um insgesamt 240° um die Arbeitsachse A in eine Arbeitsposition geschwenkt werden. Da der obere Abweiser 151 an der Tragachse 167 verdrehsicher fixiert ist, liegt der Abweiserflügel 152 genau über der Klinge des fixen Messers 161.

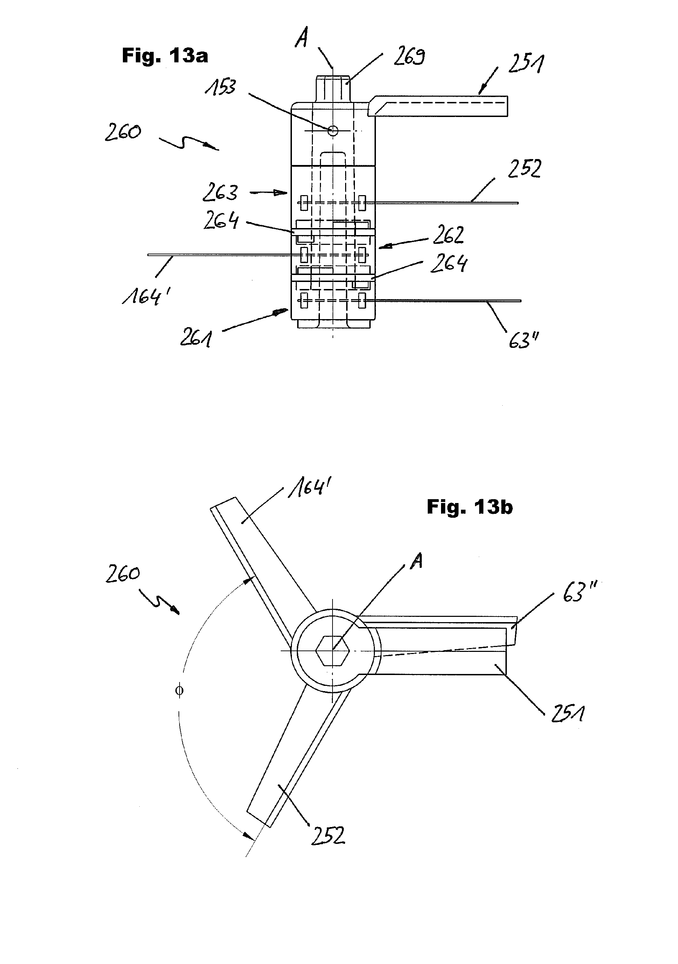

Die Figuren 13 bis 17 illustrieren eine weitere bevorzugte Ausführungsform einer als Schneideinheit 260 mit drei Messern 261, 262 und 263, wobei das zweite Messer 262 und das dritte Messer 263 jeweils mithilfe eines Zwischenstücks 264 um insgesamt 480° gegenüber dem in Richtung der Arbeitsachse A darunter liegendem Messer 261, 262 schwenkbar sind. Diese Ausführungsform hat sich als besonders geeignet erwiesen, wenn sehr harte Lebensmittel, beispielsweise hartes Gemüse zerkleinert werden soll. Somit wird ermöglicht, dass beim erstmaligen Betätigen der Schneideinheit 260 die volle Kraft für mehr als eine volle Umdrehung nur auf das erste Messer 261 wirkt und das zweite und dritte Messer 262, 263 durch die Trägheit des Scheidgutes zurückgehalten werden. Erst nach mehr als einer Umdrehung, beispielsweise um 480°, kommt das zweite Messer 262 zum Einsatz. Entsprechend wird das dritte Messer 263 beispielsweise nach weiteren 480°, also nach 960° gegenüber dem ersten Messer 261 aktiv in Rotation versetzt. Figur 13a zeigt die Schneideinheit 260 in einer Seitenansicht mit weggelassenem unteren Abweiser, Figur 13b zeigt die Schneideinheit 260 in einer Sicht von oben mit den in Arbeitsstellung auf Lücke zueinander angeordneten Klingen. Der in der Figur 13b eingezeichnete Winkel φ von annähernd 120° illustriert die relative Winkellage der Klingen 164' und 252 in Draufsicht zueinander, die diese in ihrer jeweiligen Arbeitsstellung zueinander einnehmen. Um in diese Stellung zu kommen wird die Klinge 164' jedoch um 120° plus eine volle Umdrehung von 360° also um insgesamt 480° relativ zur Klinge 252 verschwenkt.

Die Schneideinheit 260 ist so aufgebaut, dass auf das erste Messer 261 mit seiner Tragachse 267 ein Zwischenstück 264, ein zweites Messer 262, wieder eine Zwischenstück 264, ein drittes Messer 263 und schlussendlich ein oberer Abweiser 251 aufgesteckt wird. Der obere Abweiser 251 ist mit der Tragwelle beispielsweise über einen Splint 253 in axialer Richtung fixiert und drehgesichert wirkverbunden.

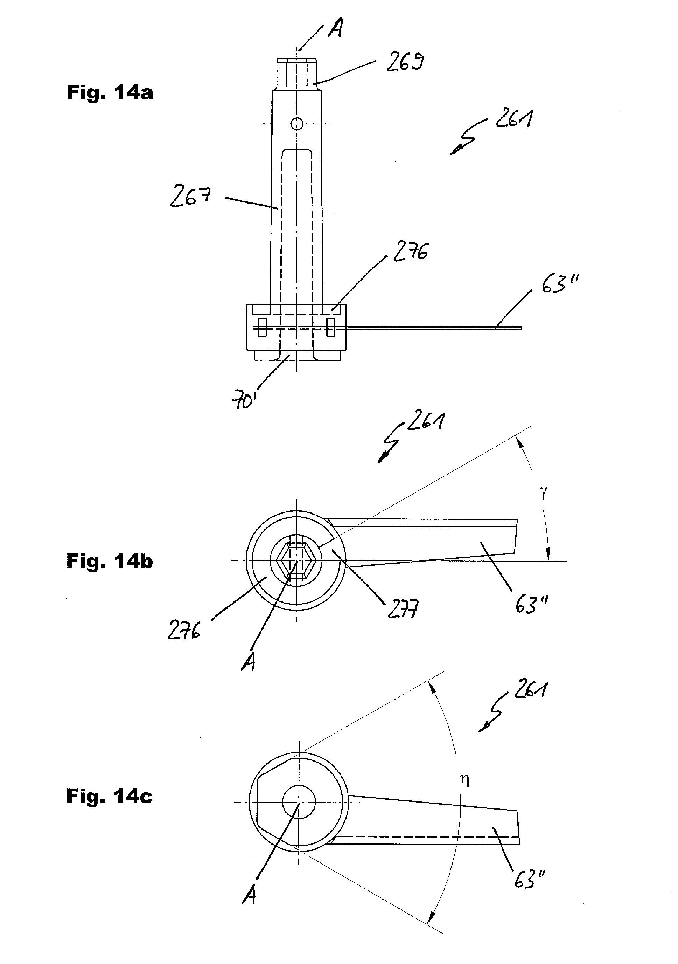

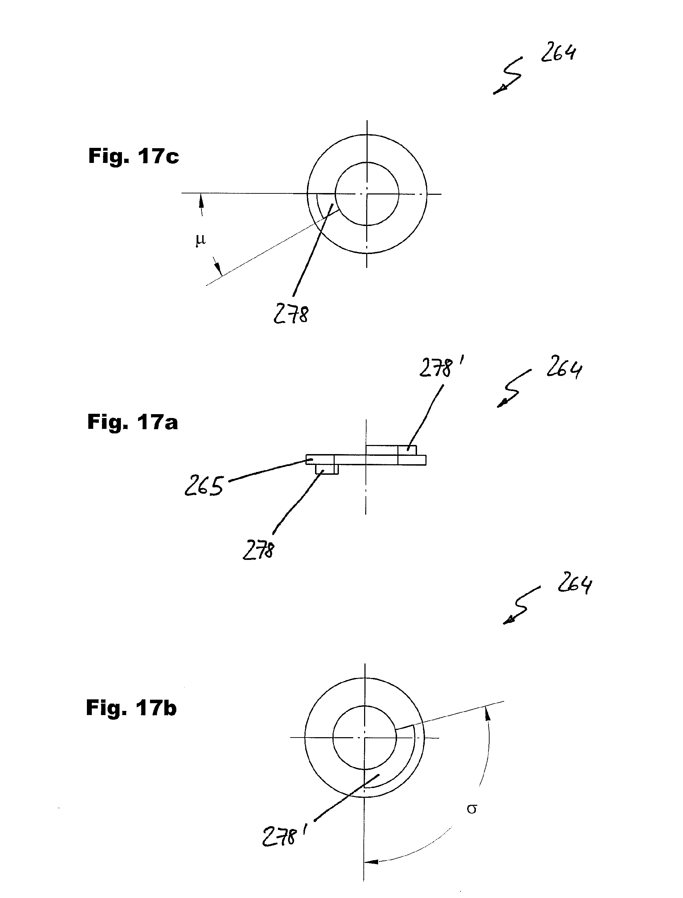

In den Figuren 14a bis 14c ist eine bevorzugte Ausführungsform eines ersten Messers 261 einer Schneideinheit 260 gemäss Figur 13 dargestellt. Figur 14a zeigt das erste Messer 261 in einer Seitenansicht, Figur 14b in einer Ansicht von oben und 14c in einer Ansicht von unten. In Figur 14b ist deutlich der kreisringsegmentförmige obere Ringspalt 276 mit einem oberen Anschlag 277 zu sehen. Dieser Ringspalt 276 und der kreisringsegmentförmige obere Anschlag 277, der sich über einen Winkel γ von etwa 30° erstreckt, wirken mit einer unteren Radialrippe 278 des Zwischenstücks 264 aus Figur 17 zusammen, die sich um einen Winkell µ von ebenfalls 30° an der Unterseite des Zwischenstücks erstreckt.

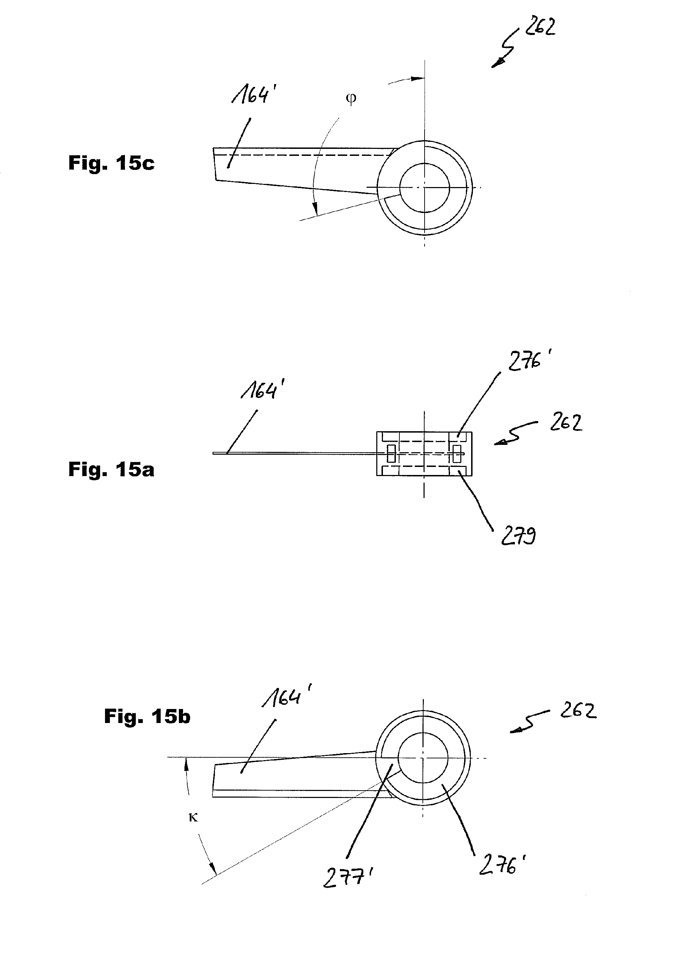

Die Figuren 15a bis 15c zeigen ein zweites Messer 262 der Schneideinheit 260 gemäss Figur 13 wiederum in einer Seitenansicht, einer Ansicht von oben und einer Ansicht von unten. Das zweite Messer 262 hat auf seiner unteren Seite, wie in Figur 15c zu erkennen ist, einen unteren Ringspalt 279 und mit einem unteren Anschlag 280 mit Winkel λ von 60°, welche beide mit einer oberen Radialrippe 278' eines Zwischenstücks 264 gemäss Figur 17 mit Winkel σ von 60° zusammenwirken. Auf der oberen Seite des zweiten Messers ist eine oberer Ringspalt 276' mit oberem Anschlag 277' ähnlich dem Ringspalt 276 und Anschlag 277 des ersten Messers 261 ausgebildet, welcher wiederum mit einer unteren Radialrippe 278 eines Zwischenstücks 264 zusammenwirken.

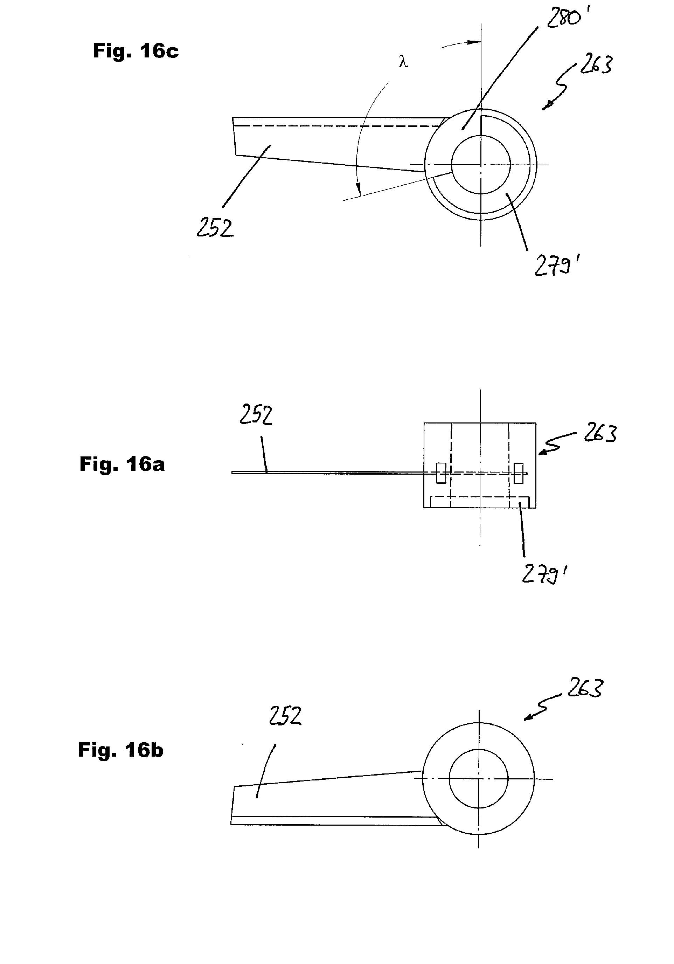

Die Figuren 16a bis 16c zeigen in einer Seitenansicht, einer Ansicht von oben und einer Ansicht von unten ein drittes Messer 263 einer Schneideinheit 260 gemäss Figur 13. Bei diesem Messer 263 ist wiederum unten ein unterer Ringspalt 279' und ein unterer Anschlag 280' ausgebildet, welcher mit einer oberen Radialrippe 278' des Zwischenstücks 264 zusammenwirkt.

In den Figuren 17 a bis 17c ist ein Zwischenstück 264 der Schneideinheit 260 gemäss Figur 13 dargestellt, wobei Figur 17a das Zwischenstück 264 in einer Seitenansicht, Figur 17b in einer Ansicht von oben und Figur 17c in einer Ansicht von unten zeigt. Das Zwischenstück 264 besteht im Wesentlichen aus einer scheibenförmigen Basis 265 mit auf der Ober- und Unterseite angebrachten Radialrippen 278 und 278' und ist bevorzugt aus demselben Material gefertigt, aus dem die Halter der Messer 261, 262, 263 gefertigt sind.

Das erste Messer 261 der Schneideinheit 260 wird in oben beschriebener, bekannter Weise direkt über seinen Antriebsnocken 269 von der Antriebseinheit 10, 10' direkt angetrieben. Zwischen dem ersten Messer 261 und dem zweiten Messer 262 wird nun ein Zwischenstück 264 so eingebracht, dass jeweils die Radialrippen 278 und 278' des Zwischenstücks in die entsprechenden Ringspalte 276 und 279 der Messer 261, 262 eingreifen und mit den entsprechenden Anschlägen 278 und 280 zusammenwirken. Es hat sich als vorteilhaft erwiesen, dass das zweite Messer 262 erst nach eine Drehung des ersten Messers 261 um 480° um die Arbeitsachse A zu arbeiten beginnt, bzw. mitdreht. In einer bevorzugten Ausführungsform wird diese freie Drehung gleichmässig zwischen erstem Messer 261 und Zwischenstück 264 sowie Zwischenstück 264 und zweitem Messer 262 aufgeteilt. Die Drehung um einen Schwenkwinkel von 240° um die Arbeitsachse A zwischen erstem Messer 261 und Zwischenstück 264 kann realisiert werden, in dem der obere Anschlag 277 und die untere Radialrippe 278 sich je über einen Winkel von 60° erstrecken. Die Drehung zwischen Zwischenstück 264 und zweitem Messer 262 kann identisch realisiert werden. Es ist selbstverständlich denkbar, dass der Schwenkwinkel für das freie Schwenken des zweiten Messers bezüglich des ersten Messers durch Anpassen der Grösse der Radialrippen und der entsprechenden Ringspalte, sowie - wenn nötig - durch Einfügen weiterer Zwischenstücke beliebig eingestellt werden kann.

In gleicher Weise wird zwischen dem zweiten Messer 262 und dem dritten Messer 263 wiederum ein Zwischenstück 264 eingefügt, so dass auch das dritte Messer 263 gegenüber de, zweiten Messer 262 eine begrenzte Bewegungsfreiheit erhält. Auch hier hat sich eine Schwenkfreiheit um einen Schwenkwinkel von 480° als vorteilhaft erwiesen, welche in gleicher Weise wie oben beschrieben erreicht werden kann.

Der Schwenkwinkel für das freie Schwenken des zweiten und dritten Messers kann durch Anpassen der Grösse der Radialrippen und der entsprechenden Ringspalte, sowie wenn nötig durch Einfügen weiterer Zwischenstücke beliebig eingestellt werden. Die Verteilung der Drehwinkel, bzw. die Winkelverhältnisse von Radialrippe zu Anschlag können unterschiedlich ausgestaltet werden. Es versteht sich von selbst, dass solche Variationen möglich sind ohne dabei vom Geist der Erfindung abzuweichen.

Da die Trägheit des zu verarbeitenden Gutes, beispielsweise des Schneidgutes, sowohl auf die ganzen Schneidgutteile, als auch auf bereits durch die von den Arbeitsmitteln zerkleinerten Teile auswirkt und diese sich daher normalerweise eher in der Nähe des Bodens 31 des Arbeitbehälters 30, 130 als bei der Basis 21, 21', 121 des Oberteils 2, 2', 102 aufhalten werden sind die Arbeitsmittel, insbesondere die Klingen 63", 164', 252 - in Richtung der Arbeitsachse A gesehen - näher beim unteren Ende der Arbeitseinheit 260 angeordnet sind, als beim gegenüberliegenden oberen Ende 269 der Arbeitseinheit 260.

Es lassen sich in weiteren bevorzugten Ausführungsformen auch mehr als eine Klinge an einem Klingenhalter anordnen, wobei diese wiederum in derselben Winkelposition oder versetzt zueinander am selben Winkelhalter positioniert sein können. Die Geometrie der Klingen und deren Anstellwinkel am Klingenhalter wird ebenfalls variiert und für den jeweiligen Verwendungszweck optimiert. Da sich der Schneideinsatz 60 der erfindungsgemässen Geräte sehr einfach wechseln lässt, hat es sich als vorteilhaft erwiesen, verschiedene Schneid- oder Arbeitseinheiten anzubieten. Neben den bereits beschriebenen Schneideinheiten zum Schneiden von Gemüse und Obst, Nüssen oder Schokolade können solche zum Schneiden von Kräutern mit sehr schmalen dünnen Klingen und solche zum Hacken von Eis mit stabilen Klingen und gezahnter Schneide eingesetzt und angeboten werden.

Zum Schälen von Zwiebeln und/oder Knoblauch werden an Stelle der Klingen, fingerförmige Arbeitsmittel eingesetzt, wie sie von gattungsgleichen Geräten bekannt sind. Zum Verarbeiten von weichem oder vorgekochtem Gemüse und/oder Obst, insbesondere zur Zubereitung von Kleinkinder- und Säuglingsnahrung, werden Arbeitsmittel zum Schneiden und zum Quetschen in einer Einheit miteinander kombiniert.

Durch weitere Einsätze, die anstelle des Schneideinsatzes im Unterteil angeordnet und mittels der Antriebseinheit in Drehung versetzt werden können, zum Beispiel durch einen Korb zum Schleudern von Kräutern, einen S-förmigen Mischarm oder einen Quirl zum Aufschäumen von Milch, lassen sich die erfindungsgemässen Geräte polyvalent in Küche und Haushalt einsetzen.

Auch der als Schneidgutbehälter gestaltete Arbeitsbehälter, der in den bisher beschriebenen Ausführungsformen als im Wesentlichen drehrund und sich im Durchmesser nach unten verjüngend dargestellt wurde, lässt sich einfach auswechseln und an den jeweiligen Einsatzzweck anpassen. Durch einen separaten Deckel lässt sich ein Schneidgutbehälter mit dem fertig bearbeiteten Gut verschliessen und aufbewahren. Der Schneideinsatz oder ein anderer Arbeitseinsatz wird dazu entfernt. Mit einem zweiten Schneidgutbehälter ist das erfindungsgemässe Gerät wieder einsatzbereit.

Gemäss bevorzugter Ausführungsformen, wie sie in den Figuren gezeigt sind, weist der Boden des Schneidgutbehälters einen zentralen nach oben ragenden Lagerzapfen auf. Der zylindrische Zapfen dient als Widerlager für die Welle mit den Arbeitsmitteln, die an Ihrer Unterseite mit einer entsprechenden zylindrischen Ausnehmung zur Aufnahme des Lagerzapfens versehen ist. Ohne vom Gedanken der Erfindung abzuweichen, kann der Boden des Schneidgut- oder Arbeitsgefässes auch mit einer Aufnahmeöffnung versehen sein, in die ein entsprechender Zapfen an der Welle oder die Welle selbst eingesteckt werden können.

Dadurch, dass die Welle vorzugsweise an beiden Enden gelagert ist, erhöht sich die Stabilität der Konstruktion ganz entscheidend und das Volumen des Arbeits- oder Schneidgutbehälters, und damit die effektiv bearbeitbare Füllmenge, können gegenüber den bekannten kleinen Handgeräten wesentlich erhöht werden.

Gemäss weiterer Ausführungsformen der Erfindung wird auf die untere Lagerung der Welle verzichtet, so dass der Schneidgut- oder Arbeitsbehälter keinen Zapfen oder andere Mittel zum Lagern der Welle aufweisen muss. Die obere Lagerung der Arbeits- oder Schneideinheit ist in diesem Fall derart ausgebildet, dass die Arbeits- oder Schneideinheit drehmomentschlüssig und in axialer Richtung fest am entsprechenden Mittel des Mitnehmers lösbar befestigbar ist. Dies lässt sich zum Beispiel durch eine bekannte Bajonettkupplung bewerkstelligen.

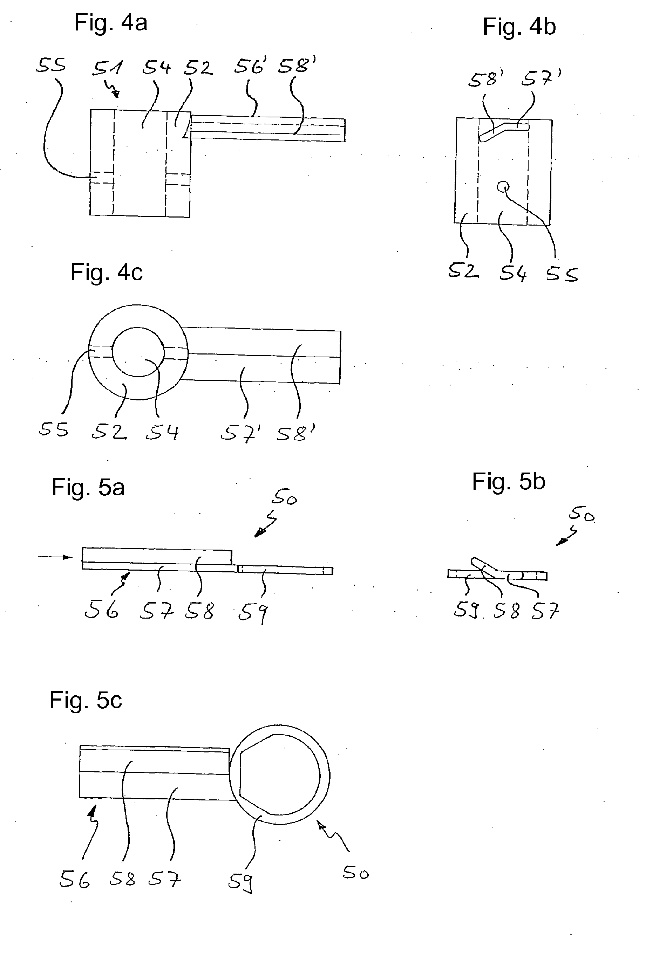

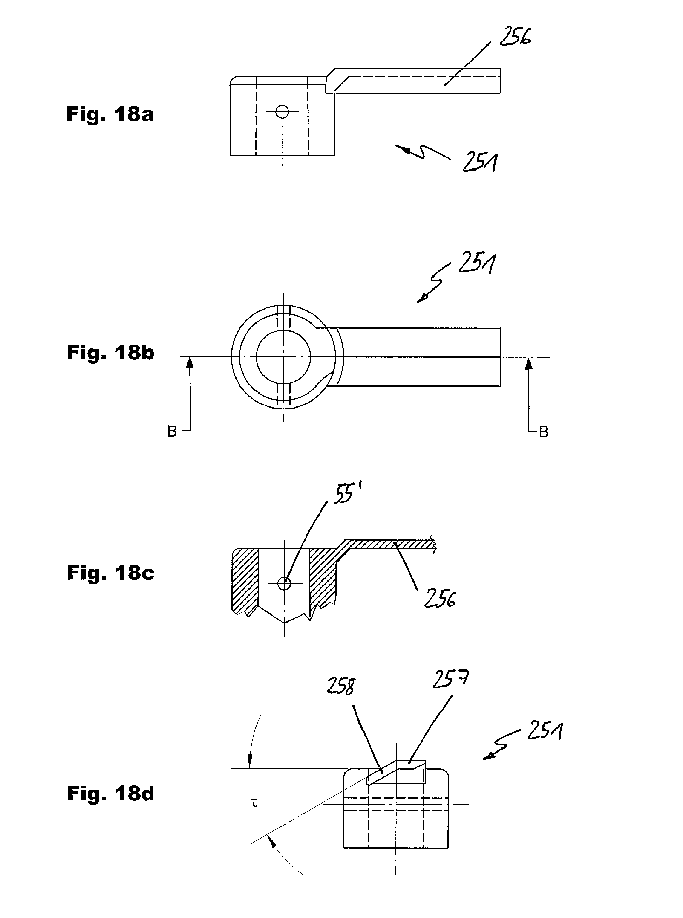

In den Fig. 18a bis 18d sind jeweils eine Seitenansicht, eine Ansicht von unten und oben eines oberen Abweisers 251 gemäss Fig. 13 und eine Schnittansicht entlang der Linie B - B der Fig. 18b gezeigt. Im Unterschied zum in den Fig. 4 dargestellten Abweiser ist ein Abweiserflügel des in Fig. 13 gezeigten Abweisers 251 in Richtung der Arbeitsachse A weiter in Richtung des oberen Endes, beziehungsweise des Antriebsnockens 269 verschoben, so dass eine Art Knie entsteht (siehe Fig. 18c). Durch eine derartige Anordnung des Abweiserflügels 256 kann bewirkt werden, dass beim Verwenden dieser Schneideinheit 260 mit einem Gerät 10, 10' ein bezüglich des Wirkbereiches toter Bereich zwischen dem oberen Abweiserflügel 256 und der Unterseite der Deckelbasis 21, 21', 121 weiter verringert werden kann. Dadurch klebt weniger bearbeitete Masse an der Unterseite der Deckelbasis, sondern wird wieder in den Wirkbereich der Arbeitsmittel - in dieser Ausführungsform der Arbeitseinheit 260 der Klingen 163', 164' und 252 - zurückbefördert. In dieser Ausführungsform des oberen Abweisers 251 sind ein Horizontalsegment 257 und ein Deflektor 258 ähnlich denjenigen von Fig. 4b ausgebildet. Ein Neigungswinkel τ zwischen Horizontalsegment 257 und Deflektor 258 ist in Fig. 18d mit ungefähr 30° dargestellt. Der Neigungswinkel τ liegt zwischen 0° und 90°, vorzugsweise zwischen 10° und 60°, gemäss Fig.18d bei ungefähr 30°.

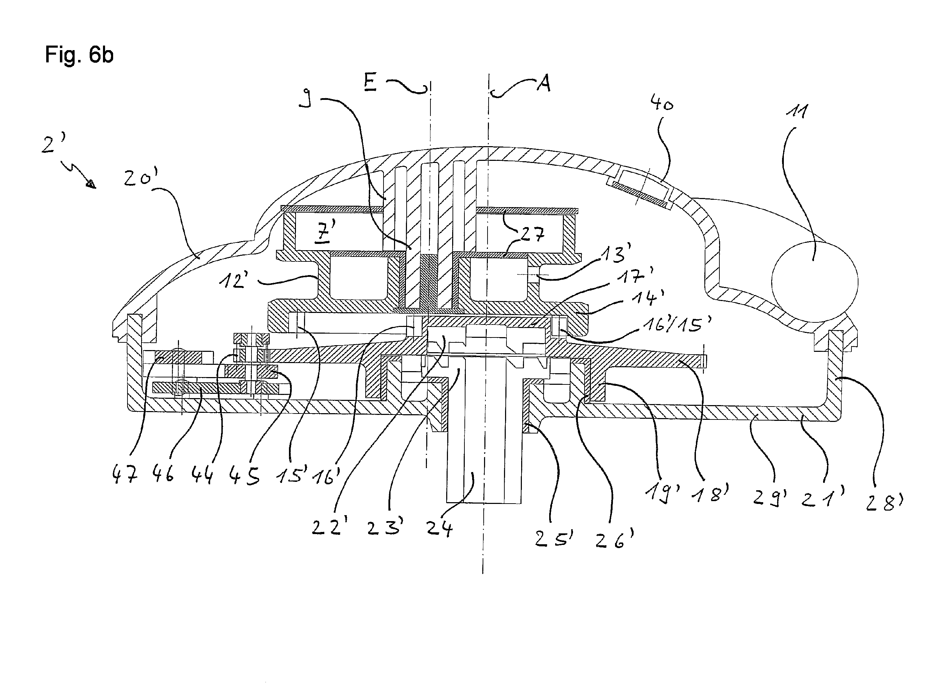

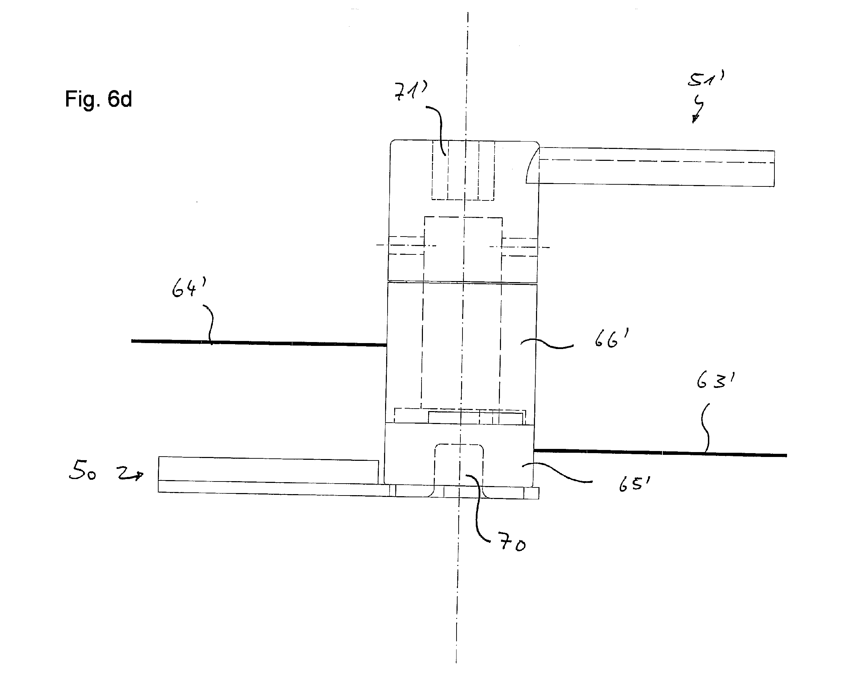

Wie in den Figuren 1 und 6 angedeutet, wird das Gerät gemäss der vorliegenden Erfindung zum Beispiel manuell über einen Schnurzug angetrieben. Die Länge der Zugschnur ist mit 400 bis 750 mm, vorzugsweise 600 mm, so gewählt dass sich bei einem entsprechenden Durchmesser der Haspel pro Zug an der Schnur (bis zu deren vollständiger Abwicklung) die Haspel 3- bis 6-mal, vorzugsweise 4- bis 5-mal dreht. Während im Ausführungsbeispiel der Figur 1 die Drehbewegung der Schnurhaspel 1:1 auf die Schneideinheit übertragen wird, ist in den Figuren 6a und 6b ein Gerät 1' mit einer Antriebseinheit 10' mit Übersetzung dargestellt. Die Schnurrolle oder Haspel 12' sitzt auf einer exzentrisch zur Geräte- beziehungsweise Arbeitsachse A verlaufenden, am Deckel angeordneten Achse 9', wobei sie einstückig mit einem darüber liegenden Federgehäuse 7' und einem darunter liegenden Treibrad 14' gefertigt ist. Das exzentrisch angeordnete Treibrad 14' ist mit einer Innenverzahnung 15' versehen, die in die Aussenverzahnung 16' eines konzentrisch im Oberteil 2' gelagerten Axialrades 17' eingreift. Im dargestellten Ausführungsbeispiel beträgt die Übersetzung 1:1,8, wobei sich eine Übersetzung von bis zu 1:4 als vorteilhaft erwiesen hat. Das Axialrad 17' sitzt auf einem Generatorrad 18', das im Durchmesser wesentlich grösser als das Axialrad ist und über eine Aussenverzahnung ein Laufrad 44' eines peripher im Oberteil angeordneten Generators 45' mit einer grossen Übersetzung von beispielsweise 1:15 antreibt. Der Generator versorgt eine Elektronikeinheit 47' und eine im Deckel angebrachte Anzeigeeinheit 40' mit Strom, wobei die stromführenden Leitungen in den Figuren jeweils nicht dargestellt sind. Die Elektronikeinheit mitsamt Generator ist vorzugsweise auf einer Grundplatine 46' angeordnet, die sich auf entsprechende Nippel am Boden 29' der Basis 21' befestigen lässt. Für einfachere Ausführungsformen des Gerätes ohne Schneidgradindikator, wird bei der Produktion einfach die Grundplatine mit Generator und die Elektronikeinheit weggelassen und die Aufnahmeöffnung für die Anzeigeeinheit mit einem passenden Einsatz verschlossen. Beide Gerätevarianten lassen sich so mit denselben Spritzgussformen herstellen, was sich äusserst günstig auf die Herstellungskosten auswirkt.

Elektronikeinheit 47' und Anzeigeeinheit 40' sind Bestandteile eines Schneidgradindikators, der es gemäss der vorliegenden Erfindung auch für ungeübte Benutzer einfach macht, Schneidgut mit einem idealen Schneidgrad zu erhalten. Die Anzeigeeinheit 40' ist für den Benutzer gut sichtbar, wie es zum Beispiel in der Figur 6b und 6edargestellt ist, in einem Durchbruch im Deckel 20' angeordnet. Die Position oberhalb der Aussparung für den Handgriff 11' hat sich als vorteilhaft erwiesen, da sie beim Gebrauch dem Nutzer zugewandt bleibt und nicht durch die Hand des Benutzers, die das Gerät festhält, verdeckt wird. Vorzugsweise ist der Schneidgradindikator, insbesondere seine Anzeigeeinheit 40' sehr einfach aufgebaut und ohne weitere Anleitung für den Benutzer intuitiv verständlich. Im Ausführungsbeispiel der Figur 6e ist demgemäss eine Anzeigeeinheit in Form von drei Leuchtdioden 41', 42', 43', für den Benutzer gut sichtbar im Deckel eingelassen. Die drei LEDs in den Farben grün, gelb und rot sind in Reihe nebeneinander angeordnet. Um die Anzahl der Umdrehungen der Arbeitseinheit, zum Beispiel der Schneideinheit 60' und damit der Klingen 61', 62' zu erfassen, wird vorzugsweise die Anzahl der Umdrehungen des Laufrades von der Elektronik erfasst und zwischengespeichert. Sobald der zwischengespeicherte Wert über einem vorgegebenen Wert (von zum Beispiel 5 Klingen-Umdrehungen) liegt, leuchtet oder blinkt die grüne LED der Anzeige auf. Dadurch wird dem Benutzer signalisiert, dass das Schneidgut zwar schon gleichmässig zerkleinert, aber noch recht grob ist. Die grüne LED leuchtet oder blinkt vorzugsweise von einem Kondensator gespeist so lange die kumulierte Umdrehungszahl unter einem vorgegebenen Wert MM liegt. Durch weitere Züge am Schnurzug wird die Schneideinheit weiter gedreht und nach überschreiten von MM Umdrehungen wechselt die Anzeige auf gelb, das heisst die gelbe LED wird angesteuert und die Grüne abgeschaltet. Dem Benutzer wird dadurch signalisiert, dass das Schneidgut nun fein geschnitten vorliegt und nach etwa MM weiteren Zügen wechselt die Anzeige in den roten Bereich, das heisst die rote LED leuchtet oder blinkt anstelle der gelben auf. Der Benutzer bekommt damit die Information, dass das Schneidgut nun sehr fein zerkleinert vorliegt und ein weiteres Bearbeiten nur noch fein püriertes Schneidgut ergibt. Gemäss einer bevorzugten Ausführungsform ist von 0 bis 7 Umdrehungen die grüne LED aktiv, von 8 bis 14 die gelbe und ab 15 die rote.

Alternativ kann die Reihenfolge der LED-Farben auch gelb, grün und rot gewählt werden, so dass der Nutzer ein noch grobes Schneidgut durch gelb signalisiert bekommt, feineres Schneidgut durch die grüne LED und sehr feines Schneidgut oder Püree durch das rote Licht. Anstelle der LEDs ist in einer weiteren Ausgestaltungsform eine verbrauchsarme LCD-Anzeige vorgesehen, bei der die zunehmende Feinheit des Schnittgutes oder ein anderer Arbeitsfortschritt beispielsweise durch einen wachsenden Balken symbolisiert wird.

Da es nicht gewünscht ist, das Gerät zur Lebensmittelbearbeitung mit einer Batterie zu versehen, wird der nötige Strom zum Betrieb des elektronischen Schneidgradindikators vorzugsweise über den oben genannten Generator erzeugt, der durch die Drehbewegung beim Schneiden oder Bearbeiten angetrieben wird. Die vom Generator gelieferte Spannung wird gleichgerichtet und dient dem Laden eines Speicherkondensators. Aus diesem Speicherkondensator werden die nachgeschaltete Elektronik und die Anzeigeeinheit mit Energie versorgt. Der Stromverbrauch für die Elektronik und die LEDs ist so gering, dass der Benutzer den mechanischen Widerstand, der vom Dynamo erzeugt wird, praktisch nicht bemerkt. Um den Stromverbrauch weiter zu verringern, können die LEDs blinkend betrieben werden. Um auf zusätzliche Bedienungselemente und damit verbundene Bauteile verzichten zu können, schaltet die Elektronik einige Sekunden nach Stillstand der Antriebseinheit die Anzeige ab und stellt den internen Zähler wieder auf Null.

Nach Erreichen des gewünschten Feinheitsgrades stoppt der Benutzer den Antrieb und die Schnur wird durch die vorgespannte Feder aufgewickelt, bis der Handgriff wieder in der am Deckel vorgesehenen Ruheposition zu liegen kommt. Das Oberteil kann vom Schneidgutbehälter abgenommen werden und das fertig bearbeitete Material entleert oder im Behälter gelagert werden.

Die technische Lehre hinsichtlich des Schneidgradindikators lässt sich vorteilhafterweise auch auf andere manuell betriebene Küchengeräte übertragen, bei denen ein gewünschter Bearbeitungsgrad mit einer bestimmten Anzahl von Arbeitstakten, vorzugsweise mit Umdrehungen einer Antriebs- oder Arbeitseinheit, korreliert ist.

Bei ausführlichen Versuchen hat es sich zum Erreichen eines homogenen Schneidergebnisses als äusserst vorteilhaft erwiesen, unter- und/oder oberhalb der Klingen Abweiser 50, 51 anzubringen, die bewirken, dass das Schneidgut immer wieder in den Bereich der Messerklingen geschleudert wird. Wie im Ausführungsbeispiel der Figuren 1, 6 und 12 dargestellt ist, sind für die neuen Schneidgeräte vorzugsweise ein unterer 50, 50' und ein oberer Abweiser 51, 151 vorgesehen, wobei, wie bereits vorgängig beschrieben, der obere Abweiser vorzugsweise in der selben radialen Winkelposition angeordnet ist wie die feststehende Klinge und der untere Abweiser in einer, der feststehenden Klinge gegenüberliegenden, 180°-Position montiert ist. In den Figuren 4, 5 und 10 sind obere Abweiser 51, 151 (Figur 4, 10) und ein unterer Abweiser 50 (Figur 5) dargestellt, die vorzugsweise im Gerät gemäss der Figur 1 zum Einsatz kommen. Während der obere Abweiser 51, 151 bevorzugterweise fest mit der Tragachse 167 verbunden ist, ist der untere Abweiser 50 mit einem Ring 59 formschlüssig und verdrehsicher unten an den Klingenhalter 65 gesteckt. Der radial abstehende Abweiserflügel 56, 156 umfasst ein in Drehrichtung P gesehen vorderes Horizontalsegment 57, 157 und einen nachfolgenden abgewinkelt nach oben stehenden Deflektor 58. Schneidgut, das auf den radial drehenden Deflektor 58, 58', 158 trifft, wird von diesem nach oben in den Wirkbereich der Klingen geschleudert, was insbesondere bei leichtem Schneidgut wie Petersilie oder anderen Kräutern einen äusserst positiven Einfluss auf das Schneidergebnis hat. Analog dazu wirkt der obere Abweiserflügel 51, 151, indem er mit seinem Deflektor 58', 158 das nach oben geschleuderte Schneidgut wieder nach unten in den Bereich der Messer, respektive der Klingen schleudert. Der obere Abweiserflügel verhindert, dass noch grobe Stücke des Schneidgutes zwischen der obersten Klinge und unter dem Innenboden des Oberteils "liegen" beziehungsweise haften bleiben. Dies wäre möglich, da infolge der hohen Rotationsgeschwindigkeit der Schneideinheit das Schneidgut Auftrieb erhält und somit ausserhalb des, durch die Klingen definierten, vertikalen Schneidbereichs "liegen" bleibt. Dies verhindert der obere Abweiserflügel, indem er diese noch nicht zerkleinerten Stücke zurück in den Schneidbereich führt und dadurch für ein wesentlich regelmässigeres Schneidgut sorgt.

Der untere Abweiserflügel wirkt als Auftriebsflügel. Er hilft, dass leichtgewichtiges Schneidgut, d.h. Kräuter, Blätter etc., nicht am Boden des Behälters kleben, insbesondere wenn diese feucht verarbeitet werden. Durch den konstanten Auftrieb wird das Schneidgut stets wieder nach oben in den Schneidbereich transportiert. Der untere Abweiser ist daher nicht fest mit der Tragwelle verbunden, sondern wird bei Bedarf durch den Benutzer unter der untersten, festen Messerklinge auf die Tragwelle aufgesteckt.

Die oben beschriebenen erfindungsgemässen Abweiser haben auch in Versuchen mit bekannten gattungsgleichen Geräten mit rotierenden Schneideinheiten mit feststehenden Klingen das Schneidergebnis äusserst positiv beeinflusst. Die um eine vertikale Drehachse rotierenden Arbeits- oder Schneideinheiten von bekannten Geräten mit manuellem oder elektrischem Antrieb können mit einem unteren und/oder oberen Abweiser versehen werden, wobei diese lösbar oder fix an geeigneten Teilen der Schneideinheiten angeordnet sind.

### Liste der Bezugszeichen

- 1, 1', 100: Gerät
- 2, 2', 102: Oberteil
- 3, 103: Unterteil
- 5: Aussparung für Handgriff
- 6: Durchführöffnung
- 7, 7': Federgehäuse
- 8, 8': Deckelachse
- 9': exzentrische Achse
- 10, 10': Antriebseinheit
- 11': Handgriff
- 12, 12': Haspel/Schnurrolle
- 13': Öffnung
- 14': Treibrad
- 15': Innenverzahnung
- 16': Aussenverzahnung
- 17': Axialrad
- 18': Generartorrad
- 19': Axialradnabe
- 20, 20': Deckel
- 21, 21', 121: Basis
- 22, 22': Kupplung (männlicher Teil)
- 23, 23': Mitnehmer
- 24': Antriebsnocken
- 25': Lagerschale
- 26': Lagerzapfen
- 27': Lagerscheiben
- 28, 28': Seitenwand Basis
- 29', 129: Boden Basis
- 30, 130: Arbeitsbehälterbehälter
- 31: Boden
- 32, 32': Seitenwand
- 33, 33': Lagerzapfen
- 34, 34': Rippe
- 35': Rutschsicherung
- 40': Anzeigeeinheit
- 41': erste LED
- 42': zweite LED
- 43': dritte LED
- 44, 44': Laufrad
- 45': Generator
- 46, 46': Grundplatine
- 47, 47': Elektronikeinheit
- 50, 50': unterer Abweiser
- 51, 51', 151, 251: oberer Abweiser
- 52, 52': Halter
- 53, 53', 253: Splint
- 54, 54': Stecköffnung
- 55, 55': Splintloch
- 56, 56', 156, 256: Abweiserflügel
- 57, 57', 157, 257: Horizontalsegment
- 58, 58', 158, 258: Deflektor
- 59: Ring
- 60, 160, 260: Arbeitseinheit
- 61, 61', 161, 261: erstes Messer
- 62, 62', 162, 262: zweites Messer, erstes bewegliches Messer
- 63, 63', 63": erste Klinge
- 64, 64', 164, 146': zweite Klinge
- 65, 65', 165: erster Klingenhalter
- 66, 66', 166: zweiter Klingenhalter
- 67, 67', 167, 267: Tragachse
- 68: Splintloch
- 69, 169, 269: Antriebsnocken
- 70, 70': Lageröffnung
- 71, 71', 171: Aufnahmeöffnung
- 72, 172: Radialrippe
- 73: vordere Anschlagfläche
- 74: hintere Anschlagfläche
- 75: Schürze
- 76: Ringspalt
- 77, 177: Anschlag
- 78: vordere Anschlagfläche
- 79: hintere Anschlagfläche
- 153: Halter
- 163, 263: drittes Messer, zweites bewegliches Messer
- 252: dritte Klinge
- 264: Zwischenstück
- 265: Basis
- 168: Halter
- 170: Radialrippe
- 178: Anschlag
- 276, 276': oberer Ringspalt
- 277, 277': oberer Anschlag
- 278, 278': Radialrippe
- 279, 279': unterer Ringspalt
- 280, 280': unterer Anschlag

## Patentansprüche

1. Arbeitseinheit, für ein Gerät zum Bearbeiten von Lebensmitteln, umfassend mindestens ein auf einer Arbeitsachse (A) angeordnetes und in Umfangsrichtung der Arbeitsachse (A) wirkendes Arbeitsmittel, **dadurch gekennzeichnet, dass** oberhalb und/oder unterhalb des Arbeitsmittels mindestens ein Abweiser angeordnet ist.

2. Arbeitseinheit nach Anspruch 1, **dadurch gekennzeichnet, dass** mindestens zwei Arbeitsmittel vorgesehen sind.

3. Arbeitseinheit (60, 160, 260) nach Anspruch 1, **dadurch gekennzeichnet, dass** die Arbeitsachse (A) durch eine Tragachse (67, 167, 267) definiert ist.

4. Arbeitseinheit nach Anspruch 3, **dadurch gekennzeichnet, dass** der Abweiser mindestens je einen in Umfangsrichtung der Arbeitsachse (A) wirkenden Abweiserflügel umfasst, welcher im Betrieb der Arbeitseinheit (60, 160, 260) mit der Tragachse (67, 167, 267) mitdreht, um das zu bearbeitende Gut, das beim Rotieren der Arbeitseinheit (60) um die Arbeitsachse (A) nach oben oder unten aus dem Wirkbereich der Arbeitsmittel (63, 63', 63", 64, 64', 164, 164', 252) geschleudert wird, zurück in diesen Wirkbereich zu fördern.

5. Arbeitseinheit nach Anspruch 1, **dadurch gekennzeichnet, dass** der mindestens eine Abweiser im Wesentlichen radial zur Arbeitsachse A ausgerichtet ist.

6. Arbeitseinheit nach einem der vorangegangenen Ansprüche, **dadurch gekennzeichnet, dass** der untere Abweiser drehmomentschlüssig lösbar oder fix an einem in Richtung der Arbeitsachse (A) gesehenen unteren Ende der Arbeitseinheit (60, 160, 260) befestigbar ist.

7. Arbeitseinheit (60, 160, 260) nach einem der vorangegangenen Ansprüche, **dadurch gekennzeichnet, dass** die Arbeitsmittel (56, 56', 156, 256, 63, 63', 63", 64, 64', 164, 164', 252) aus der folgenden Gruppe ausgewählt sind oder Kombinationen davon umfassen: Klingen zum Schneiden und/oder Quetschen, Finger zum Kneten oder Schälen, Schläger zum Schäumen.

8. Arbeitseinheit nach Anspruch 6, **dadurch gekennzeichnet, dass** die Arbeitsmittel eine Schneideinheit bilden, wobei die Schneideinheit vorzugsweise feststehende Klingen umfasst.

9. Arbeitseinheit nach einem der Ansprüche 1 bis 7, **dadurch gekennzeichnet, dass** mindestens ein Abweiser oberhalb und mindestens ein Abweiser unterhalb des Arbeitsmittels, vorzugsweise oberhalb und unterhalb der Schneideinheit, angeordnet ist.

10. Arbeitseinheit nach Anspruch 8, **dadurch gekennzeichnet, dass** die Klingen (63, 63', 63", 64, 64', 164, 164', 252) im Wesentlichen radial zur Arbeitsachse (A) ausgerichtet sind.

11. Arbeitseinheit nach Anspruch 4, **dadurch gekennzeichnet, dass** der mindestens eine Abweiserflügel (56, 56', 156, 256) des oberen und/oder des unteren Abweisers (50, 50', 51, 51',151, 251) ein Horizontalsegment (57, 57', 157, 257) und einen Deflektor (58, 58', 158, 258) umfasst.

12. Arbeitseinheit nach Anspruch 11, **dadurch gekennzeichnet, dass** der Deflektor (58,) des unteren Abweisers (50, 50') zum Horizontalsegment (57) des unteren Abweisers (50, 50') in Drehrichtung gesehen abgewinkelt nach oben steht.

13. Arbeitseinheit nach Anspruch 12, **dadurch gekennzeichnet, dass** das Horizontalsegment (57, 57', 157, 257) und der Deflektor (58, 58', 158, 258) des oberen Abweisers (51, 51', 151, 251) einen Neigungswinkel τ einnehmen, und der Deflektor (58, 58', 158, 258) in Drehrichtung gesehen abgewinkelt nach unten steht.

14. Arbeitseinheit nach Anspruch 12, **dadurch gekennzeichnet, dass** der Neigungswinkel
τ zwischen Horizontalsegment und Deflektor einen Neigungswinkel zwischen 0° und 90°, vorzugsweise zwischen 10° und 30°, besonders bevorzugt von 30° einnehmen.

15. Gerät zum Bearbeiten von Lebensmitteln, umfassend eine Arbeitseinheit gemäss einem der Ansprüche 1 bis 14.
